(19)

Europäisches
Patentamt

European
Patent Office

Office européen
des brevets

(11) **EP 4 549 778 A1**

(12) **EUROPEAN PATENT APPLICATION**
published in accordance with Art. 153(4) EPC

(43) Date of publication:
07.05.2025 Bulletin 2025/19

(21) Application number: 23831215.1

(22) Date of filing: 20.06.2023

(51) International Patent Classification (IPC):
*F16G 1/08* (2006.01)      *B29D 29/10* (2006.01)
*C08K 3/04* (2006.01)      *C08K 7/02* (2006.01)
*C08L 11/00* (2006.01)

(52) Cooperative Patent Classification (CPC):
B29D 29/10; C08K 3/04; C08K 7/02; C08L 11/00;
F16G 1/08

(86) International application number:
PCT/JP2023/022827

(87) International publication number:
WO 2024/004769 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022  JP 2022104906
07.02.2023  JP 2023016797
30.05.2023  JP 2023088786

(71) Applicant: **Mitsuboshi Belting Ltd.**
**Kobe-shi, Hyogo 653-0024 (JP)**

(72) Inventors:
• **MATSUMOTO Hideyuki**
**Kobe-shi, Hyogo 653-0024 (JP)**
• **MIKI Atsushi**
**Kobe-shi, Hyogo 653-0024 (JP)**

(74) Representative: **Hoffmann Eitle**
**Patent- und Rechtsanwälte PartmbB**
**Arabellastraße 30**
**81925 München (DE)**

(54) **RUBBER COMPOSITION FOR TRANSMISSION BELT, TRANSMISSION BELT, AND METHOD FOR MANUFACTURING TRANSMISSION BELT**

(57) The present invention pertains to a rubber composition used for a compressed rubber layer of a transmission belt, the rubber composition comprising a chloroprene rubber, a short fiber, an adhesiveness improver, and carbon black, wherein: the short fiber includes an aramid short fiber; and, with respect to 100 parts by mass of the chloroprene rubber, the proportion of the short fiber is 15-38 parts by mass, the proportion of the aramid short fiber is 5-28 parts by mass, the proportion of the adhesiveness improver is 0.1-3.2 parts by mass, and the proportion of the carbon black is 30-70 parts by mass.

*FIG. 2*

EP 4 549 778 A1

**Description**

TECHNICAL FIELD

The present invention relates to a rubber composition capable of forming a compression rubber layer of a power-transmission belt such as a variable speed belt, a power-transmission belt including the compression rubber layer formed by the rubber composition, and a method for manufacturing the power-transmission belt.

BACKGROUND ART

A power-transmission belt used in a power-transmission system of a mechanical device or the like is broadly classified into a frictional power-transmission belt and a synchronous power-transmission belt based on a form of power transmission. As the frictional power-transmission belt, a V-belt, a V-ribbed belt, and a flat belt are known, and as the synchronous power-transmission belt, a toothed belt is known.

One example of the V-belt is a raw-edge type belt (raw-edge V-belt) in which a frictional power-transmission surface (V-shaped side surface) is an exposed rubber layer. Examples of the raw-edge type belt include a raw-edge V-belt in which cogs are not provided, and a cogged V-belt such as a raw-edge cogged V-belt in which cogs are provided only on an inner circumferential surface of the belt to improve bendability, and a raw-edge cogged V-belt (raw-edge double cogged V-belt) in which cogs are provided on both an inner circumferential surface and an outer circumferential surface of the belt to improve bendability.

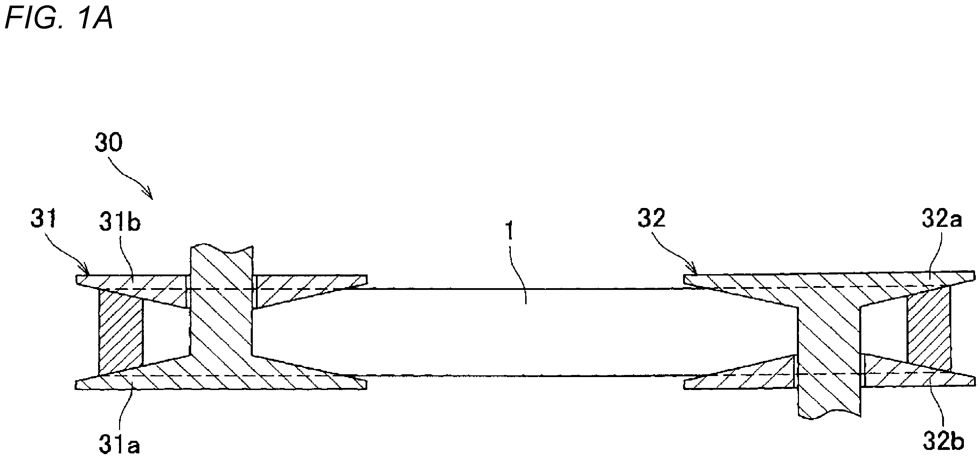

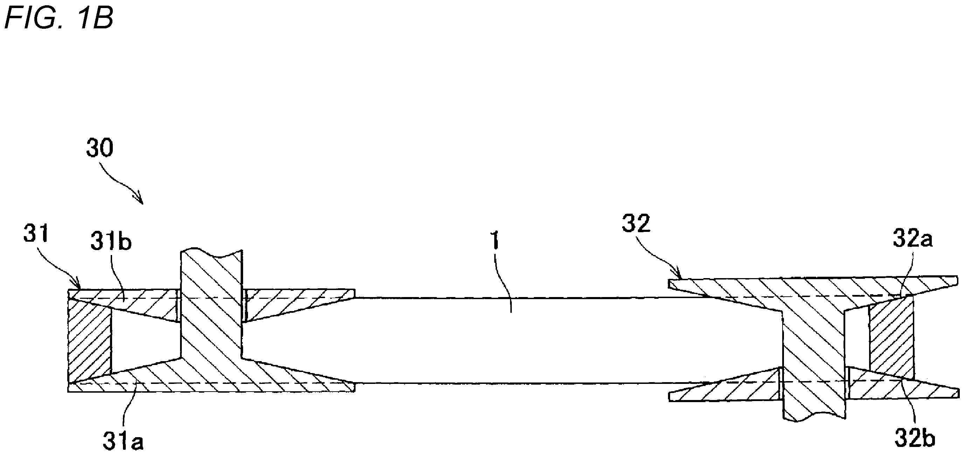

An example of an application of these V-belts (particularly, raw-edge cogged V-belt) is a belt-type continuously variable transmission. As illustrated in FIG. 1A and FIG. 1B, a belt-type continuously variable transmission 30 is a device in which a V-belt 1 is wound around a driving pulley 31 and a driven pulley 32 to continuously change a gear ratio. The pulley 31 or 32 includes a fixed sheave 31a or 32a whose movement in an axial direction is restricted or fixed, and a movable sheave 31b or 32b which is movable in the axial direction. The pulley 31 or 32 has a structure in which a width of a V-shaped groove formed by the fixed sheave 31a or 32a and the movable sheave 31b or 32b can be continuously changed. Both end surfaces in a width direction of the V-belt 1 have tapered surfaces each having an inclination corresponding to opposing surfaces of the V-shaped grooves of the pulleys 31 and 32, and are engaged at any positions in a pulley radial direction according to a changed width of the V-shaped grooves. For example, when a state illustrated in FIG. 1A is changed to a state illustrated in FIG. 1B by decreasing the width of the V-shaped groove of the driving pulley 31 and increasing the width of the V-shaped groove of the driven pulley 32, the V-belt 1 moves toward an outer circumferential side in the pulley radial direction on a driving pulley 31 side and moves toward an inner circumferential side in the pulley radial direction on a driven pulley 32 side. A radius of winding of the belt around the respective pulleys 31 and 32 is continuously changed, making it possible to continuously change the gear ratio.

A V-belt (variable speed belt) used for such an application is designed specifically to endure not only winding and rotation running between two shafts of a driving pulley and a driven pulley but also movement in a pulley radial direction and a repeated bending action due to a continuous change in a radius of winding.

For example, JP2004-3609A (Patent Literature 1) discloses a power-transmission belt in which a rubber compound for forming a compression rubber layer contains 100 parts by mass of chloroprene rubber, 1 part by mass to 40 parts by mass of poly(p-phenylenebenzobisoxazole) short fibers, 10 parts by mass to 60 parts by mass of carbon black, and 0.5 parts by mass to 10 parts by mass of N-N'-m-phenylene dimaleimide as a vulcanization accelerator. It is described that when a content of N-N'-m-phenylene dimaleimide is less than 0.5 parts by mass, a crosslink density is small and an effect of improving wear resistance is small, and when the content exceeds 10 parts by mass, elongation of the vulcanized rubber is significantly reduced and the bending resistance is reduced.

JP2012-241831A (Patent Literature 2) discloses a power-transmission belt in which a compression rubber layer includes a fatty acid amide and short fibers. It is described that the fatty acid amide improves dispersibility and orientation of the short fibers, improves adhesion between a rubber component and the short fibers, precipitates on a surface of the compression rubber layer to reduce a friction coefficient of a rubber layer surface, and improves power-transmission efficiency.

JP2014-209026A (Patent Literature 3) discloses a power-transmission belt in which a compression rubber layer contains a chloroprene rubber, short fibers, and a polyolefin resin. It is described that in order to improve fuel consumption saving properties, a friction coefficient is reduced by excessively adding the short fibers, but there is a risk that cracks easily occur in an interface between a rubber component and the short fibers to impair durability, whereas when the polyolefin resin is added, the friction coefficient of the compression rubber layer can be reduced and wear resistance of the belt can be improved.

As disclosed in these patent literatures, a technique of adding the short fibers to the compression rubber layer of the V-belt to reduce the friction coefficient and improve the wear resistance and the fuel consumption saving properties is a well-known technique. In Patent Literatures 1 to 3, the short fibers are combined with N-N'-m-phenylene dimaleimide, the fatty acid amide, the polyolefin resin, and the like, but improvement measures focusing on a type of short fibers is also attempted as other methods.

For example, JPH04-366045A (Patent Literature 4) discloses a power-transmission belt in which a part of aramid short fibers is replaced with nylon fibers. It is described that an elastic modulus is mainly increased by the aramid fibers, while a friction coefficient is stabilized by the nylon fibers.

JP2010-151209A (Patent Literature 5) discloses a power-transmission belt in which a friction coefficient is set within a specific range by blending short fibers and a lubricant in a compression rubber layer. It is described that the short fibers may be meta-aramid fibers that do not fibrillate. It is described that short fibers that fibrillate such as para-aramid fibers are used in the prior art, whereas by using short fibers that do not fibrillate such as meta-aramid short fibers, a predetermined friction coefficient can be obtained with a smaller amount of addition than that when the short fibers that fibrillate are used.

CITATION LIST

PATENT LITERATURE

Patent Literature 1: JP2004-3609A
Patent Literature 2: JP2012-241831A
Patent Literature 3: JP2014-209026A
Patent Literature 4: JPH04-366045A
Patent Literature 5: JP2010-151209A

SUMMARY OF INVENTION

TECHNICAL PROBLEM

However, as in Patent Literatures 1 to 3, when the short fibers are added to the compression rubber layer of the V-belt to reduce the friction coefficient, if an amount of the short fibers is increased, crack resistance tends to be reduced, and it is difficult to simultaneously improve the wear resistance, the fuel consumption saving properties, and the crack resistance.

On the other hand, even though a belt having the configuration disclosed in Patent Literatures 4 to 5 also shows a certain effect of improving the wear resistance, the fuel consumption saving properties, and the crack resistance, the belt is still not sufficient to satisfy a required level. Particularly, motorcycles, four-wheeled buggies, snowmobiles, and agricultural machines such as harvesters, in which a variable speed belt is used, are becoming increasingly powerful, and it becomes difficult to provide a rubber composition that sufficiently satisfies these characteristics in the related art.

Accordingly, an object of the present invention is to provide a rubber composition that can simultaneously improve wear resistance, fuel consumption saving properties, and crack resistance when used in a power-transmission belt, and to provide a power-transmission belt that simultaneously improves the wear resistance, the fuel consumption saving properties, and the crack resistance.

SOLUTION TO PROBLEM

In order to achieve the above object, the present inventors have discovered that by combining a chloroprene rubber, a short fiber including an aramid short fiber, an adhesiveness improver, and carbon black in a specific proportion to form a compression rubber layer of a power-transmission belt, it is possible to simultaneously improve wear resistance, fuel consumption saving properties, and crack resistance of the power-transmission belt, and have completed the present invention.

That is, a rubber composition as an aspect [1] of the present invention relates to a rubber composition used for a compression rubber layer of a power-transmission belt, the rubber composition including:

a chloroprene rubber;
a short fiber;
an adhesiveness improver; and
a carbon black, in which
the short fiber includes an aramid short fiber, and
a proportion of the short fiber is 15 parts by mass to 38 parts by mass, a proportion of the aramid short fiber is 5 parts by mass to 28 parts by mass, a proportion of the adhesiveness improver is 0.10 parts by mass to 3.20 parts by mass, and a proportion of the carbon black is 30 parts by mass to 70 parts by mass, with respect to 100 parts by mass of the chloroprene rubber.

An aspect [2] of the present invention is an aspect according to the aspect [1], in which the short fiber further includes an aliphatic polyamide short fiber, and
a proportion of the aliphatic polyamide short fiber is 25 parts by mass or less with respect to 100 parts by mass of the chloroprene rubber.

An aspect [3] of the present invention is an aspect according to the aspect [2], in which an average fiber length of the aliphatic polyamide short fiber is 1.5 mm or more.

An aspect [4] of the present invention is an aspect according to any one of the aspects [1] to [3], in which the carbon black includes a soft carbon.

An aspect [5] of the present invention is an aspect according to any one of the aspects [1] to [4], in which the adhesiveness improver includes a phenol resin and/or an amino resin.

The present invention also includes, as an aspect [6], a power-transmission belt including a compression rubber layer including the rubber composition according to any one of the aspects [1] to [5].

The present invention also includes, as an aspect [7], a method for manufacturing a power-transmission belt, the method including:
a kneading step of kneading the rubber composition according to any one of the aspects [1] to [5] to prepare an uncrosslinked rubber sheet for forming a compression rubber layer.

ADVANTAGEOUS EFFECTS OF INVENTION

In the present invention, since the chloroprene rubber, the short fiber including the aramid short fiber, the adhesiveness improver, and the carbon black are combined in a specific proportion as the rubber composition for forming the compression rubber layer of the power-transmission belt, it is possible to simultaneously improve wear resistance, fuel consumption saving properties, and crack resistance of the power-transmission belt. Particularly, unlike common technical knowledge in the related art, workability is not reduced due to adhesion of the adhesiveness improver, and the rubber composition can be prepared with high productivity.

BRIEF DESCRIPTION OF DRAWINGS

[FIG. 1A] FIG. 1A is a schematic view for illustrating a transmission system of a belt-type continuously variable transmission.
[FIG. 1B] FIG. 1B is a schematic view for illustrating the transmission system of the belt-type continuously variable transmission.
[FIG. 2] FIG. 2 is a schematic cross-sectional perspective view of an example of a power-transmission belt of the present invention.
[FIG. 3] FIG. 3 is a schematic cross-sectional view in which the power-transmission belt in FIG. 2 is cut in a belt longitudinal direction.
[FIG. 4] FIG. 4 is a schematic view for illustrating a method for measuring bending stress in Examples.
[FIG. 5] FIG. 5 is a schematic view illustrating a layout of a power-transmission efficiency test of a raw-edge cogged V-belt obtained in Examples.
[FIG. 6] FIG. 6 is a schematic view illustrating a layout of a wear durability test of the raw-edge cogged V-belt obtained in Examples.
[FIG. 7] FIG. 7 is a schematic view illustrating a layout of a crack durability test of the raw-edge cogged V-belt obtained in Examples.

DESCRIPTION OF EMBODIMENTS

A rubber composition of the present invention is characterized in that an adhesiveness improver is blended into the rubber composition for a compression rubber layer with an object of improving adhesiveness between a rubber component and a short fiber.

In a power-transmission belt, embedding the short fiber parallel to a width direction of the power-transmission belt to improve wear resistance while maintaining fuel consumption saving properties can be considered as a well-known technique, and there is a method of increasing an amount of the short fibers without making rubber itself too hard in order to achieve both the wear resistance and the fuel consumption saving properties. However, when the amount of the short fibers is increased, crack resistance tends to be reduced, and this tendency is considered to be due to low adhesiveness between the rubber component and the short fiber. In this regard, in order to improve the adhesiveness between the rubber component and the short fiber, it is common to add an adhesiveness improver to an adhesion rubber, but an adhesiveness improver is not usually added to the compression rubber layer as the rubber composition may become more sticky during a kneading stage, and operability may be reduced.

In order to improve the wear resistance, there is a method of increasing hardness of the rubber itself by blending a large amount of a reinforcing agent such as carbon black, a crosslinking agent, a crosslinking accelerator, and a co-crosslinking agent, but bendability and fuel consumption saving properties are reduced.

In this regard, a basic design concept of the present invention is to improve wear resistance and fuel consumption saving properties by using a short fiber, while maintaining crack resistance by combining an adhesiveness improver.

[Chloroprene Rubber]

The rubber composition of the present invention contains a chloroprene rubber as an essential rubber component from a viewpoint of a good balance of wear resistance, heat resistance, cold resistance, weather resistance, and the like, and excellent adhesiveness to short fibers. The chloroprene rubber may be a sulfur-modified rubber or a non-sulfur-modified rubber.

In the rubber composition of the present invention, the rubber component may further contain other rubbers in addition to the chloroprene rubber. Examples of the other rubber components include a diene rubber other than chloroprene rubber [a natural rubber, an isoprene rubber, a butadiene rubber, a styrene butadiene rubber (SBR), an acrylonitrile butadiene rubber (nitrile rubber), a hydrogenated nitrile rubber (including a mixed polymer of a hydrogenated nitrile rubber and an unsaturated carboxylate metal salt), and the like], an ethylene-$\alpha$-olefin elastomer, a chlorosulfonated polyethylene rubber, an alkylated chlorosulfonated polyethylene rubber, an epichlorohydrin rubber, an acrylic rubber, a silicone rubber, a urethane rubber, and a fluorine rubber.

A proportion of the other rubber components may be 100 parts by mass or less, preferably 50 parts by mass or less, furthermore preferably 30 parts by mass or less, and more preferably 10 parts by mass with respect to 100 parts by mass of the chloroprene rubber.

A proportion of the chloroprene rubber may be 50 mass% or more, preferably 80 mass% or more, furthermore preferably 90 mass% or more, and most more preferably 100 mass% (that is, chloroprene rubber only) in the rubber component. The proportion of the chloroprene rubber may be 30 mass% or more, preferably 30 mass% to 70 mass%, furthermore preferably 40 mass% to 60 mass%, more preferably 42 mass% to 52 mass%, and most preferably 44 mass% to 48 mass% in the rubber composition of the present invention.

[Short Fiber]

The rubber composition of the present invention contains the short fiber as an essential component to improve the wear resistance of the compression rubber layer and reduce a friction coefficient. Particularly, when the short fiber is oriented in a belt width direction and embedded in the compression rubber layer, compression deformation of the power-transmission belt against a pressure from a pulley can be prevented, and thus the wear resistance can be improved while maintaining the fuel consumption saving properties. Examples of a method of orienting the short fiber in the belt width direction include a method of rolling with a roll.

(Aramid Short Fiber)

The short fiber includes an aramid short fiber as an essential fiber to improve the wear resistance of the power-transmission belt.

An aramid fiber constituting the aramid short fiber may be a para-aramid fiber or a meta-aramid fiber.

Examples of the para-aramid fiber include a poly paraphenylene terephthalamide fiber (for example, "Twaron (registered trademark)" manufactured by Teijin Ltd., and Kevlar (registered trademark)" manufactured by Toray Du Pont Co., Ltd.), and a copolymer fiber of polyparaphenylene terephthalamide and 3,4'-oxydiphenylene terephthalamide (for example, "Technora (registered trademark)" manufactured by Teijin Ltd., etc.).

Examples of the meta-aramid fiber include a polymetaphenylene isophthalamide fiber (for example, Conex (registered trademark)" manufactured by Teijin Ltd.).

These aramid fibers may be used alone or in combination of two or more kinds thereof. In these aramid fibers, the meta-aramid fiber is preferred from a viewpoint of having a large effect of reducing the friction coefficient of the compression rubber layer and being able to improve the fuel consumption saving properties. Particularly, when using only the aramid short fiber as the short fiber, it is preferable to use the meta-aramid fiber from a viewpoint of being able to improve power-transmission efficiency and the fuel consumption saving properties. When the aramid short fiber is combined with the other short fibers, from a viewpoint of being able to improve bending fatigue resistance and crack resistance and having an excellent balance with the fuel consumption saving properties, the para-aramid short fiber is preferred as the aramid short fiber, and combination of the para-aramid short fiber and an aliphatic polyamide short fiber (described later) is particularly preferred.

An average fiber diameter of the aramid short fiber is, for example, 2 μm or more, preferably 2 μm to 100 μm, furthermore preferably 3 μm to 50 μm, more preferably 7 μm to 40 μm, and most preferably 10 μm to 30 μm. If the average fiber diameter of the aramid short fiber is too small, there is a risk that a friction coefficient on a surface of the compression rubber layer cannot be sufficiently reduced.

An average fiber length of the aramid short fiber is, for example, 1 mm to 20 mm, preferably 1.3 mm to 15 mm, furthermore preferably 1.5 mm to 10 mm, more preferably 2 mm to 5 mm, and most preferably 2.5 mm to 4 mm. If the average fiber length of the aramid short fiber is too short, mechanical properties (for example, modulus) in a grain direction cannot be sufficiently increased, and there is a risk that the bending fatigue resistance and the crack resistance are reduced. Conversely, if the average fiber length of the aramid short fiber is too long, there is a risk that poor dispersion of the aramid short fiber in the rubber composition occurs, the friction coefficient of the surface cannot be sufficiently reduced, and the power-transmission efficiency is reduced.

In the present application, the average fiber diameter and the average fiber length of the aramid short fiber can be calculated as an arithmetic average of a fiber diameter and a fiber length of an appropriate number of samples (for example, 50 samples) by performing image analysis on a photograph of the aramid short fiber taken with an electron microscope such as a transmission electron microscope or a scanning electron microscope.

The aramid short fiber may be embedded in the compression rubber layer in a state of being oriented substantially parallel to the belt width direction in order to prevent the compression deformation of the belt against the pressure from the pulley.

In the present application, "substantially parallel" to the belt width direction means that an angle with respect to the belt width direction is, for example, within 10°, preferably within 8°, furthermore preferably within 5°, more preferably within 3°, and most preferably within 1° (for example, 0° to 1°, and approximately 0° particularly).

From a viewpoint of dispersibility and adhesiveness of the aramid short fiber in the rubber composition, the aramid short fiber may be subjected to an adhesion treatment or a surface treatment.

In the adhesion treatment of the aramid short fiber, the adhesion treatment can be performed with various adhesion treatment liquids, for example, a treatment liquid containing an initial condensate (a prepolymer of a novolac or resol type phenol resin, and the like) of phenols and formalin, a treatment liquid containing a rubber component or a latex, a treatment liquid containing the initial condensate and the rubber component (latex), a treatment liquid containing a reactive compound (adhesive compound) such as a silane coupling agent, an epoxy compound (epoxy resin or the like), and an isocyanate compound. In a preferred adhesion treatment, the aramid short fiber is treated with the treatment liquid containing the initial condensate and the rubber component (latex), particularly at least a resorcin-formalin-latex (RFL) liquid. These treatment liquids may be used in combination, and for example, the aramid short fiber may be pretreated with a commonly-used adhesive component, for example, the reactive compound (adhesive compound) such as an epoxy compound (epoxy resin or the like) or an isocyanate compound, and then treated with an RFL liquid.

In the present application, in the short fiber (including other short fibers) to be blended in the rubber composition, an adhesive compound that performs adhesion treatment to a surface of the short fiber in advance is not included in a category of the adhesiveness improver blended in the rubber composition described later. Therefore, a mass of the adhesive compound that performs adhesion treatment to the surface of the short fiber is considered to be a mass of the short fiber (mass of a part of the short fiber).

The treatment with such a treatment liquid, particularly the RFL liquid, can strongly adhere the aramid short fiber to the chloroprene rubber. The RFL liquid is a mixture of latex and an initial condensate of resorcin and formaldehyde. A molar ratio of resorcin to formaldehyde may be within a range in which the adhesiveness between the rubber component and the short fiber can be improved, and the former/latter (resorcin/formaldehyde) is, for example, 1/0.3 to 1/3, preferably 1/0.4 to 1/2, furthermore preferably 1/0.5 to 1/1.5, more preferably 1/0.6 to 1/1, and most preferably 1/0.6 to 1/0.8.

A type of latex is not particularly limited, and a diene rubber (a styrene-butadiene-vinylpyridine terpolymer, a chloroprene rubber, a butadiene rubber, or the like) and a chlorosulfonated polyethylene rubber are preferred, and the styrene-butadiene-vinylpyridine terpolymer is particularly preferred.

A proportion of the initial condensate of resorcin and formalin is, for example, 10 parts by mass to 100 parts by mass, preferably 12 parts by mass to 50 parts by mass, and furthermore preferably 15 parts by mass to 30 parts by mass with respect to 100 parts by mass of the rubber component of the latex. A total solid concentration of the RFL liquid can be adjusted in a range of 5 mass% to 40 mass%.

An adhesion rate of the adhesive component (solid content) to the aramid short fiber [{(mass of aramid short fiber after adhesion treatment - mass of aramid short fiber before adhesion treatment)/(mass of aramid short fiber after adhesion treatment)} × 100] is, for example, 1 mass% to 25 mass%, preferably 2 mass% to 20 mass%, furthermore preferably 2.5 mass% to 15 mass%, more preferably 3 mass% to 10 mass%, and most preferably 4 mass% to 8 mass%. If the adhesion rate of the adhesive component is too low, the dispersibility of the aramid short fiber in the rubber composition and the adhesiveness between the aramid short fiber and the rubber composition are insufficient. Conversely, if the adhesion rate of the adhesive component is too high, there is a risk that the adhesive component strongly adheres the aramid short fibers to each other, and the dispersibility is reduced.

A proportion of the aramid short fiber is, for example, 5 parts by mass to 28 parts by mass, preferably 10 parts by mass to 25 parts by mass, furthermore preferably 12 parts by mass to 20 parts by mass, and more preferably 13 parts by mass to 18 parts by mass with respect to 100 parts by mass of the chloroprene rubber. If the proportion of the aramid short fiber is too low, there is a risk that the wear resistance is reduced. Conversely, if the proportion of the aramid short fiber is too high, there is a risk that an effect of reducing the friction coefficient is small, and the power-transmission efficiency is reduced.

(Aliphatic Polyamide Short Fiber)

The short fiber may further include an aliphatic polyamide short fiber (nylon short fiber). The aramid short fiber, which is an essential fiber, is effective for improving the wear resistance, but it is preferable to combine the aramid short fiber with the aliphatic polyamide short fiber to achieve both the wear resistance and the fuel consumption saving properties at a high level. On the other hand, when the wear resistance at a high level is required, the aramid short fiber alone may be used as the short fiber.

Examples of an aliphatic polyamide fiber constituting the aliphatic polyamide short fiber include a polyamide 46 fiber, a polyamide 6 fiber, a polyamide 66 fiber, a polyamide 610 fiber, a polyamide 612 fiber, a polyamide 11 fiber, and a polyamide 12 fiber.

These aliphatic polyamide fibers may be used alone or in combination of two or more kinds thereof. Among these, the nylon fiber having a $C_{4-8}$ alkylene chain, such as the polyamide 6 fiber or the polyamide 66 fiber, is preferred.

An average fiber diameter of the aliphatic polyamide short fiber is, for example, 2 μm or more, preferably 2 μm to 100 μm, furthermore preferably 3 μm to 50 μm, more preferably 7 μm to 40 μm, and most preferably 10 μm to 30 μm. If the average fiber diameter of the aliphatic polyamide short fiber is too small, there is a risk that the friction coefficient on the surface of the compression rubber layer cannot be sufficiently reduced.

An average fiber length of the aliphatic polyamide short fiber may be 1 mm or more (for example, 1 mm to 20 mm), and is preferably 1.5 mm or more (particularly, 2 mm or more), furthermore preferably 1.5 mm to 10 mm, more preferably 2 mm to 5 mm, and most preferably 2.5 mm to 4 mm from a viewpoint of improving the bending fatigue resistance and the crack resistance.

In the present application, the average fiber diameter and the average fiber length of the aliphatic polyamide short fiber can be calculated as an arithmetic average of a fiber diameter and a fiber length of an appropriate number of samples (for example, 50 samples) by performing image analysis on a photograph of the aliphatic polyamide short fiber taken with an electron microscope such as a transmission electron microscope or a scanning electron microscope.

The aliphatic polyamide short fiber may be embedded in the compression rubber layer in a state of being oriented substantially parallel to the belt width direction in order to prevent compression deformation of the belt against the pressure from the pulley.

From a viewpoint of dispersibility and adhesiveness of the aliphatic polyamide short fiber in the rubber composition, the aliphatic polyamide short fiber may be subjected to an adhesion treatment or a surface treatment. The adhesion treatment, including preferred aspects, can be selected from adhesion treatments exemplified as the adhesion treatment of the aramid short fiber. An adhesion treatment of the aliphatic polyamide short fiber may be different from the adhesion treatment of the aramid short fiber, but from a viewpoint of simplicity and the like, the same adhesion treatment is preferred.

A proportion of the aliphatic polyamide short fiber may be 25 parts by mass or less (for example, 0 parts by mass to 25 parts by mass), and is preferably 5 parts by mass to 25 parts by mass, furthermore preferably 10 parts by mass to 20 parts by mass, and more preferably 12 parts by mass to 18 parts by mass with respect to 100 parts by mass of the chloroprene rubber. The proportion of the aliphatic polyamide short fiber may be 1000 parts by mass or less, preferably 600 parts by mass or less, and furthermore preferably 300 parts by mass or less, and for example is 5 parts by mass to 600 parts by mass (for example, 20 parts by mass to 500 parts by mass), preferably 10 parts by mass to 200 parts by mass (for example, 20 parts by mass to 100 parts by mass), furthermore preferably 30 parts by mass to 100 parts by mass, more preferably 50 parts by mass to 80 parts by mass, and most preferably 60 parts by mass to 70 parts by mass with respect to 100 parts by mass of the aramid short fiber. If the proportion of the aliphatic polyamide short fiber is too small, there is a risk that the fuel consumption saving properties and the crack resistance are reduced. If the proportion of the aliphatic polyamide short fiber is too large, there is a risk that the wear resistance and the crack resistance are reduced.

(Other Short Fibers and Proportion of Total Amount of Short Fiber)

The short fiber may further include other short fibers other than the aramid short fiber and the nylon short fiber. Examples of the other short fibers include: synthetic short fibers such as polyolefin short fibers (polyethylene short fibers, polypropylene short fibers, or the like), polyalkylene arylate short fibers [poly $C_{2-4}$ alkylene $C_{6-14}$ arylate short fibers such as polyethylene terephthalate (PET) short fibers and polyethylene naphthalate (PEN) short fibers, or the like), vinylon short fibers, polyvinyl alcohol short fibers, and poly(p-phenylene benzobisoxazole) (PBO) short fibers; natural short fibers such as cotton, hemp, and wool; and inorganic short fibers such as carbon short fibers. The other short fibers may be used alone or in combination of two or more kinds thereof.

A proportion of the other short fibers may be 50 parts by mass or less, and is preferably 30 parts by mass or less, and furthermore preferably 10 parts by mass or less with respect to 100 parts by mass of the aramid short fiber. The short fiber may not substantially contain the other short fibers. That is, the short fiber may be a short fiber consisting of only the aramid short fiber, or may be a short fiber consisting of only the aramid short fiber and the aliphatic polyamide short fiber.

A proportion of the short fiber (a proportion of a total amount of the short fiber) is 15 parts by mass to 38 parts by mass, preferably 20 parts by mass to 35 parts by mass, and furthermore preferably 20 parts by mass to 30 parts by mass with respect to 100 parts by mass of the chloroprene rubber. If the proportion of the total amount of the short fiber is too small, the wear resistance is reduced and the friction coefficient cannot be sufficiently reduced, and thus there is a risk that the fuel consumption saving properties are not improved. On the other hand, if the proportion of the total amount of the short fiber is too large, there is a risk that the crack resistance is reduced.

[Adhesiveness Improver]

The rubber composition of the present invention contains an adhesiveness improver. In the rubber composition of the present invention, by blending the adhesiveness improver with the chloroprene rubber and the short fiber, it is possible to improve the crack resistance while improving the wear resistance and fuel consumption saving properties. Particularly, by adjusting the proportions of the short fiber and the adhesiveness improver, the rubber composition can be prepared with high productivity.

As the adhesiveness improver, a commonly-used adhesiveness improver used as an adhesiveness improver for an adhesion rubber layer can be used. Examples of the commonly-used adhesiveness improvers include a phenol resin, an amino resin, an epoxy compound, and an isocyanate compound. These adhesiveness improvers may be used alone or in combination of two or more kinds thereof. Among these, the phenol resin and/or the amino resin is preferred from a viewpoint of improving the crack resistance.

In the present application, "A and/or B" means "at least one of A and B".

(Phenol Resin)

The phenol resin (phenolic resin) may be a co-condensate containing units in which aldehydes are condensed with phenols.

Examples of the phenols include aromatic mono-ols such as phenol and alkylphenol (for example, cresol); aromatic polyols such as catechol, resorcinol (resorcin), hydroquinone, and pyrogallol; and aminophenols such as 3-aminophenol and 4-aminophenol. These phenols may be used alone or in combination of two or more kinds thereof.

Among these phenols, the aromatic mono-ols such as phenol and cresol and the aromatic polyols such as resorcinol are preferred, and at least one selected from the group consisting of phenol, cresol, and resorcinol is particularly preferred.

The phenol resin may contain, as a compound that condenses to formaldehyde, a compound having an amino group (amino group-containing compound) in addition to the phenols. Examples of the amino group-containing compound include melamine, urea, guanamine (formoguanamine, acetoguanamine, benzoguanamine, and the like), and aniline. These compounds may be used alone or in combination of two or more kinds thereof. Among these, the amino group-containing cyclic compound such as melamine is preferred.

A proportion of the amino group-containing compound may be 100 parts by mass or less (for example, 1 part by mass to 100 parts by mass), and is preferably 50 parts by mass or less, furthermore preferably 30 parts by mass or less, and more preferably 10 parts by mass or less with respect to 100 parts by mass of the phenols.

Examples of the aldehydes include aliphatic aldehydes such as formaldehyde, acetaldehyde, and propionaldehyde; aromatic aldehydes such as phenylacetaldehyde; and condensates of formaldehyde such as trioxane and paraformaldehyde.

These aldehydes may be used alone or in combination of two or more kinds thereof. Among these aldehydes, formaldehyde and paraformaldehyde are preferred, and formaldehyde is particularly preferred. Formaldehyde is usually used as formalin.

As a proportion of a total amount of the phenols and the amino group-containing compound to the aldehydes, the former/latter (molar ratio) is, for example, 1/0.5 to 1/5, preferably 1/0.6 to 1/4, and furthermore preferably 1/0.7 to 1/3.

The phenol resin may be, for example, a reaction product (for example, an initial condensate or prepolymer) obtained by reacting phenols containing resorcinol with aldehydes in the presence of water and a base catalyst (an alkali metal salt such as sodium hydroxide; an alkaline earth metal salt; ammonia; and the like). The phenol resin is preferably a phenol-formaldehyde co-condensate, a cresol-formaldehyde co-condensate, a resorcinol-formaldehyde co-condensate, a resorcinol-phenol-formaldehyde co-condensate, a resorcinol-cresol-formaldehyde co-condensate, or a resorcinol-melamine-formaldehyde co-condensate, and particularly preferably the phenol-formaldehyde co-condensate, the cresol-formaldehyde co-condensate, or the resorcinol-formaldehyde co-condensate. The phenol-formaldehyde co-condensate may be a novolac-based phenol resin.

(Amino Resin)

The amino resin may be a co-condensate of an amino group-containing compound and aldehydes. The amino resin may be a reaction product (for example, an initial condensate or a prepolymer) obtained by reacting an amino group-containing compound with aldehydes under neutral or alkaline conditions.

Examples of the amino group-containing compound include melamine, urea, guanamine (formoguanamine, acetoguanamine, benzoguanamine, and the like), and aniline.

Examples of the aldehydes include the aldehydes exemplified in the section of phenol resins. Among the aldehydes, formaldehyde is preferred.

As a proportion of the amino group-containing compound to the aldehydes, the former/latter (molar ratio) is, for example, 1/1 to 1/10, preferably 1/3 to 1/8, and furthermore preferably 1/5 to 1/7.

The amino resin may be a commonly-used amino resin, such as a melamine resin, a urea resin, a guanamine resin, or an aniline resin. Among these, the melamine resin, the urea resin (for example, methylol urea), or the guanamine resin (for example, methylol benzoguanamine) is preferred, and the melamine resin is particularly preferred.

As the melamine resin, for example, monomethylol melamine to hexamethylol melamine such as trimethylol melamine and hexamethylol melamine are generally used, and tetramethylol melamine to hexamethylol melamine (particularly, hexamethylol melamine) are preferred. The melamine resin (particularly, tetramethylol melamine to hexamethylol melamine) may be etherified with an alkyl group (for example, a $C_{1-4}$ alkyl group such as methyl, ethyl, n-butyl, and isobutyl) from a viewpoint of handling and the like. As an alkyl ether melamine resin obtained by etherification, for example, mono-$C_{1-4}$ alkoxymethyl melamine to hexa-$C_{1-4}$ alkoxymethyl melamine are widely used, and the hexa-$C_{1-4}$ alkoxymethyl melamine such as hexamethoxymethyl melamine, hexa-n-butoxymethyl melamine, and hexaisobutoxymethyl melamine is preferably used. The melamine resin may be used in combination with other amino group-containing compounds, such as urea, guanamine (formoguanamine, acetoguanamine, benzoguanamine, and the like), and aniline, together with melamine. A proportion of the other amino group-containing compounds may be 0.3 moles or less (particularly, 0.1 moles or less) per 1 mole of melamine.

(Proportion of Adhesiveness Improver)

A proportion of the adhesiveness improver (first adhesiveness improver) in the rubber composition of the present invention can be selected from a range of, for example, about 0.10 parts by mass to 3.20 parts by mass with respect to 100 parts by mass of the chloroprene rubber, and is, for example, 0.2 parts by mass to 3.1 parts by mass, preferably 0.25 parts by mass to 3 parts by mass, furthermore preferably 0.3 parts by mass to 2.5 parts by mass, more preferably 0.5 parts by mass to 2 parts by mass, and most preferably 0.8 parts by mass to 1.5 parts by mass. If the proportion of the adhesiveness improver is too low, there is a risk that the crack resistance is reduced. Conversely, if the proportion of the adhesiveness improver is too high, there is a risk that adhesion occurs in a kneading step, and the productivity is reduced.

[Carbon Black]

The rubber composition of the present invention further contains a predetermined amount of carbon black to improve the wear resistance. In the present invention, the combination of the short fiber and the adhesiveness improver can improve the wear resistance, and thus the wear resistance can be improved without blending a large amount of carbon black. Therefore, the bendability can also be improved.

In general, the carbon black is classified into several grades depending on differences in an average primary particle diameter, an iodine adsorption amount, a nitrogen adsorption specific surface area, and the like. As for the classification of the carbon black, in ASTM, the carbon black is classified into N0** to N9** based on the iodine adsorption amount, and classifications (SAF, HAF, GPF, and the like) in the related art based on a performance of a blended rubber product and the like are also used. N110 (SAF), N220 (ISAF), N330 (HAF), and the like having small average primary particle diameters are referred to as hard carbon, and N550 (FEF), N660 (GPF), N762 (SRF), and the like having large average primary particle diameters are referred to as soft carbon. There is a tight relationship between the iodine adsorption amount and the average primary particle diameter, and the smaller the average primary particle diameter, the larger the iodine adsorption amount. The carbon black is classified with reference to SEAST (registered trademark) series manufactured by Tokai Carbon Co., Ltd. as examples, and the iodine adsorption amount, and the average primary particle diameter are summarized as shown in Table 1.

Table 1

|  | ASTM classification | Classification in related art | Brand | Iodine adsorption amount (g/kg) | Average primary particle diameter (nm) |
|---|---|---|---|---|---|
| Hard carbon | N110 | SAF | SEAST 9 | 139 | 19 |
|  | N220 | ISAF | SEAST 6 | 121 | 22 |
|  | N330 | HAF | SEAST 3 | 80 | 28 |
| Soft carbon | N550 | FEF | SEAST SO | 44 | 43 |
|  | N660 | GPF | SEAST V | 26 | 62 |
|  | N762 | SRF | SEAST S | 26 | 66 |

In the present application, the carbon black contained in the rubber composition is not classified by raw materials, and the carbon black having an average primary particle diameter of 40 nm or more is referred to as the soft carbon, and the carbon black having an average primary particle diameter of less than 40 nm is referred to as the hard carbon.

In the present application, the average primary particle diameter of the carbon black can be measured by using, for example, a transmission electron microscope.

The average primary particle diameter of the soft carbon may be 40 nm or more, and a maximum primary particle diameter of the soft carbon may be, for example, 300 nm or less, preferably 200 nm or less, and furthermore preferably 100 nm or less. If the maximum primary particle diameter of the soft carbon is too large, there is a risk that an effect of improving the wear resistance is not achieved.

The average primary particle diameter of the soft carbon is, for example, 40 nm to 100 nm, preferably 41 nm to 80 nm, furthermore preferably 42 nm to 60 nm, and more preferably 43 nm to 50 nm. If the average primary particle diameter of the soft carbon is too small, there is a risk that the fuel consumption saving properties are reduced. Conversely, if the average primary particle diameter of the soft carbon is too large, there is a risk that the effect of improving the wear resistance is not achieved.

The iodine adsorption amount of the soft carbon may be less than 60 g/kg, and for example, is 10 g/kg or more and less than 60 g/kg, preferably 20 g/kg to 58 g/kg, furthermore preferably 30 g/kg to 55 g/kg, and more preferably 40 g/kg to 50 g/kg. If the iodine adsorption amount is too large, there is a risk that the fuel consumption saving properties are reduced.

In the present application, the iodine adsorption amount of the carbon black can be measured in accordance with a standard test method of ASTM D1510-17.

The average primary particle diameter of the hard carbon may be less than 40 nm, and a maximum primary particle diameter of the hard carbon may be, for example, 38 nm or less, preferably 35 nm or less, and furthermore preferably 30 nm or less.

An average primary particle diameter of the hard carbon is, for example, 10 nm to 35 nm, preferably 12 nm to 33 nm, furthermore preferably 15 nm to 30 nm, and more preferably 20 nm to 25 nm.

The iodine adsorption amount of the hard carbon may be 60 g/kg or more, for example, 60 g/kg to 150 g/kg, preferably 80 g/kg to 130 g/kg, furthermore preferably 100 g/kg to 130 g/kg, and more preferably 120 g/kg to 125 g/kg.

In the present invention, the carbon black preferably contains the soft carbon from a viewpoint that a friction coefficient and internal heat generation when a belt is bent are reduced, thereby improving fuel consumption saving properties. A proportion of the soft carbon in the carbon black may be 10 mass% or more, and is preferably 50 mass% or more, furthermore preferably 80 mass% or more, more preferably 90 mass% or more, and most preferably 100 mass%.

A proportion of the carbon black (first carbon black) in the rubber composition of the present invention is 30 parts by mass to 70 parts by mass, preferably 35 parts by mass to 65 parts by mass, furthermore preferably 40 parts by mass to 60 parts by mass, and more preferably 45 parts by mass to 55 parts by mass, with respect to 100 parts by mass of the chloroprene rubber. If the proportion of the carbon black is too small, there is a risk that the bending stress and the wear resistance of the belt are reduced. On the other hand, if the proportion of the carbon black is too large, there is a risk that the power-transmission efficiency and the crack resistance are reduced.

[Additive]

The rubber composition may contain, if necessary, other fillers (fillers other than the carbon black, such as silica, clay, calcium carbonate, talc, and mica), metal powders such as zinc powder, crosslinking agents (vulcaniziation agents), co-crosslinking agents (vulcanization aids), crosslinking accelerators (vulcanization accelerators), crosslinking retardants (vulcanization retardants), metal oxides (for example, zinc oxide, magnesium oxide, lead oxide, calcium oxide, barium oxide, iron oxide, copper oxide, titanium oxide, and aluminum oxide), softening agents (oils such as paraffin oil and naphthenic oil, or the like), processing agents or processing aids (fatty acids such as stearic acid, fatty acid metal salts such as a metal stearate, fatty acid amides such as stearic acid amide, wax, paraffin, and the like), anti-aging agents (antioxidant, thermal anti-aging agents, anti-flex-cracking agents, antiozonants, and the like), colorants, tackifiers, plasticizers, lubricants, coupling agents (silane coupling agents and the like), stabilizers (ultraviolet absorbers, thermal stabilizers, and the like), flame retardants, antistatic agents, and the like. The metal oxides may act as crosslinking agents.

A proportion of the metal powder such as zinc powder is 1 part by mass to 100 parts by mass, preferably 3 parts by mass to 50 parts by mass, more preferably 5 parts by mass to 30 parts by mass, and more preferably 8 parts by mass to 20 parts by mass with respect to 100 parts by mass of the chloroprene rubber.

As the crosslinking agent, a commonly-used component can be used, and examples thereof may include the metal oxides (magnesium oxide, zinc oxide, lead oxide, and the like), organic peroxides (diacyl peroxide, peroxy ester, dialkyl peroxide, and the like), and sulfur-based crosslinking agents. Examples of the sulfur-based crosslinking agent include a powdered sulfur, a precipitated sulfur, a colloidal sulfur, an insoluble sulfur, a highly dispersible sulfur, and a sulfur chloride (sulfur monochloride, sulfur dichloride, and the like). These crosslinking agents may be used alone or in combination of two or more kinds thereof. Among these, the metal oxides (magnesium oxide, zinc oxide, and the like) are preferred. The metal oxides may be used in combination with the other crosslinking agents (for example, sulfur-based crosslinking agents), and the metal oxides and/or sulfur-based crosslinking agents may be used alone or in combination with a crosslinking accelerator.

A proportion of the crosslinking agent is, for example, 1 part by mass to 20 parts by mass, preferably 3 parts by mass to 17 parts by mass, more preferably 5 parts by mass to 15 parts by mass, and more preferably 7 parts by mass to 13 parts by mass with respect to 100 parts by mass of the chloroprene rubber.

Examples of the co-crosslinking agent (crosslinking aid or co-agent) include known crosslinking aids, for example, polyfunctional (iso)cyanurate [for example, triallyl isocyanurate (TAIC) and triallyl cyanurate (TAC)], polydiene (for example, 1,2-polybutadiene), a metal salt of an unsaturated carboxylic acid [for example, a polyvalent metal salt of a (meth)acrylic acid such as zinc (meth)acrylate and magnesium (meth)acrylate], oximes (for example, quinone dioxime), guanidines (for example, diphenyl guanidine), polyfunctional (meth)acrylate [for example, alkanediol di(meth)acrylate such as ethylene glycol di(meth)acrylate and butanediol di(meth)acrylate, and alkane polyol poly(meth)acrylate such as trimethylolpropane tri(meth)acrylate and pentaerythritol tetra(meth)acrylate], and bismaleimides [an aliphatic bismaleimide, for example, an alkylene bismaleimide such as N,N'-1,2-ethylene dimaleimide, N,N'-hexamethylene bismaleimide, and 1,6'-bismaleimido-(2,2,4-trimethyl)cyclohexane; an arene bismaleimide or aromatic bismaleimide, such as N,N'-m-phenylene dimaleimide, 4-methyl-1,3-phenylene dimaleimide, 4,4'-diphenylmethane dimaleimide, 2,2-bis[4-(4-maleimidophenoxy)phenyl]propane, 4,4'-diphenyl ether dimaleimide, 4,4'-diphenylsulfone dimaleimide, and 1,3-bis(3-maleimidophenoxy)benzene). These crosslinking aids may be used alone or in combination of two or more kinds thereof. Among these crosslinking aids, a polyfunctional (iso)cyanurate, a polyfunctional (meth)acrylate, and bismaleimides (arene bismaleimide or aromatic bismaleimide such as N,N'-m-phenylene dimaleimide) are preferred, and bismaleimides are often used. The addition of the crosslinking aid (for example, bismaleimides) can increase a degree of crosslinking and prevent adhesion wear and the like.

A proportion of the co-crosslinking agent (crosslinking aid) such as bismaleimides is, in terms of solid content, for example, 0.1 parts by mass to 20 parts by mass, preferably 1 part by mass to 15 parts by mass, furthermore preferably 2 parts by mass to 10 parts by mass, and more preferably 3 parts by mass to 8 parts by mass with respect to 100 parts by mass of the chloroprene rubber.

Examples of the crosslinking accelerator include thiuram accelerators [for example, tetramethylthiuram monosulfide (TMTM), tetramethylthiuram disulfide (TMTD), tetraethylthiuram disulfide (TETD), tetrabutylthiuram disulfide (TBTD), dipentamethylenethiuram tetrasulfide (DPTT), and N,N'-dimethyl-N,N'-diphenylthiuram disulfide], thiazole accelerators [for example, 2-mercaptobenzothiazole, a zinc salt of 2-mercaptobenzothiazole, 2-mercaptothiazoline, dibenzothiazyl disulfide (MBTS), and 2-(4'-morpholinodithio)benzothiazole], sulfenamide accelerators [for example, N-cyclohexyl-2-benzothiazyl sulfenamide (CBS), and N,N'-dicyclohexyl-2-benzothiazyl sulfenamide], guanidines (diphenyl guanidine, di-o-tolyl guanidine, or the like), urea or thiourea accelerators (for example, ethylene thiourea), dithiocarbamates, and xanthates. These crosslinking accelerators may be used alone or in combination of two or more kinds thereof. Among these crosslinking accelerators, TMTD, DPTT, MBTS, CBS, and the like are widely used.

A proportion of the crosslinking accelerator is, in terms of solid content, for example, 0.1 parts by mass to 10 parts by mass, preferably 0.2 parts by mass to 5 parts by mass, furthermore preferably 0.3 parts by mass to 3 parts by mass, more preferably 0.4 parts by mass to 2 parts by mass, and most preferably 0.5 parts by mass to 1 part by mass with respect to 100 parts by mass of the chloroprene rubber.

A proportion of the softening agent is, for example, 1 part by mass to 30 parts by mass, preferably 2 parts by mass to 20 parts by mass, furthermore preferably 3 parts by mass to 10 parts by mass, and more preferably 4 parts by mass to 8 parts by mass with respect to 100 parts by mass of the chloroprene rubber. A proportion of the processing agent or processing aid is, for example, 0 parts by mass to 10 parts by mass, preferably 0.1 parts by mass to 5 parts by mass, furthermore preferably 1 part by mass to 3 parts by mass, and more preferably 1.5 parts by mass to 2.5 parts by mass with respect to 100 parts by mass of the chloroprene rubber.

A proportion of the anti-aging agent is, for example, 0.5 parts by mass to 15 parts by mass, preferably 1 part by mass to 13 parts by mass, furthermore preferably 3 parts by mass to 12 parts by mass, and more preferably 5 parts by mass to 10 parts by mass with respect to 100 parts by mass of the chloroprene rubber.

[Power-Transmission Belt]

The power-transmission belt of the present invention is not particularly limited as long as the power-transmission belt has a compression rubber layer that can come into contact with a pulley, and may be a power-transmission belt including a tension member layer (adhesion rubber layer), a compression rubber layer formed on one surface of the tension member layer, and a tension rubber layer formed on the other surface of the tension member layer. Furthermore, among power-transmission belts, a frictional power-transmission belt that requires wear resistance is preferred.

Examples of the frictional power-transmission belt include a V-belt [a wrapped V-belt, a raw-edge V-belt, and a raw-edge cogged V-belt (a raw-edge cogged V-belt obtained by forming cogs on an inner circumferential side of the raw-edge V-belt, a raw-edge double cogged V-belt obtained by forming cogs on both an inner circumferential side and an outer circumferential side of the raw-edge V-belt)], and a V-ribbed belt. Among these V-belts, the V-belt or V-ribbed belt in which a power-transmission surface is formed in a V-shape or inclined at a V angle is preferred. A V-belt that is required to achieve both wear resistance and fuel consumption saving properties at a high level, for example, a V-belt used in a belt-type continuously variable transmission (for example, a raw-edge cogged V-belt), is particularly preferred.

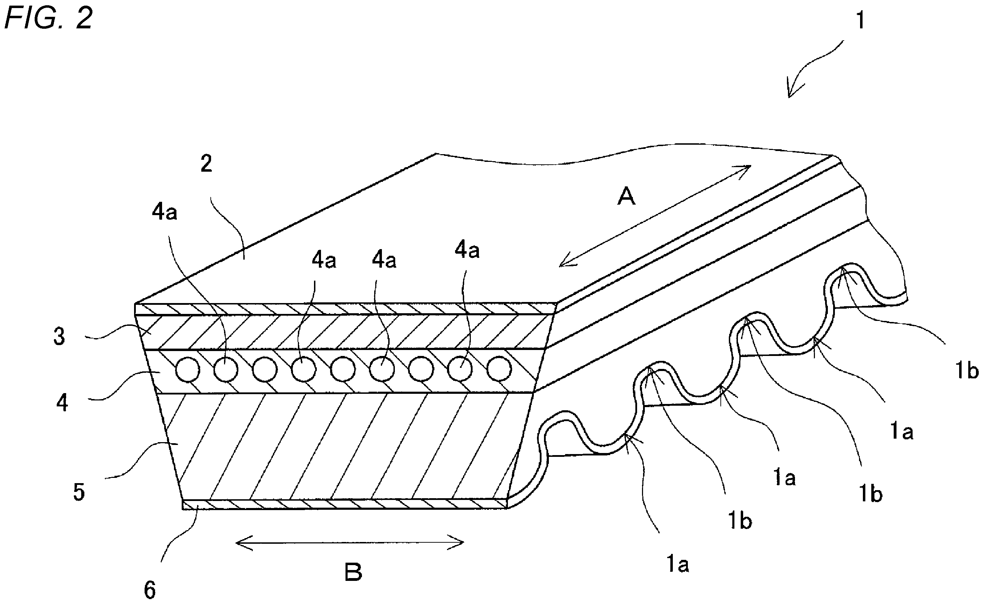

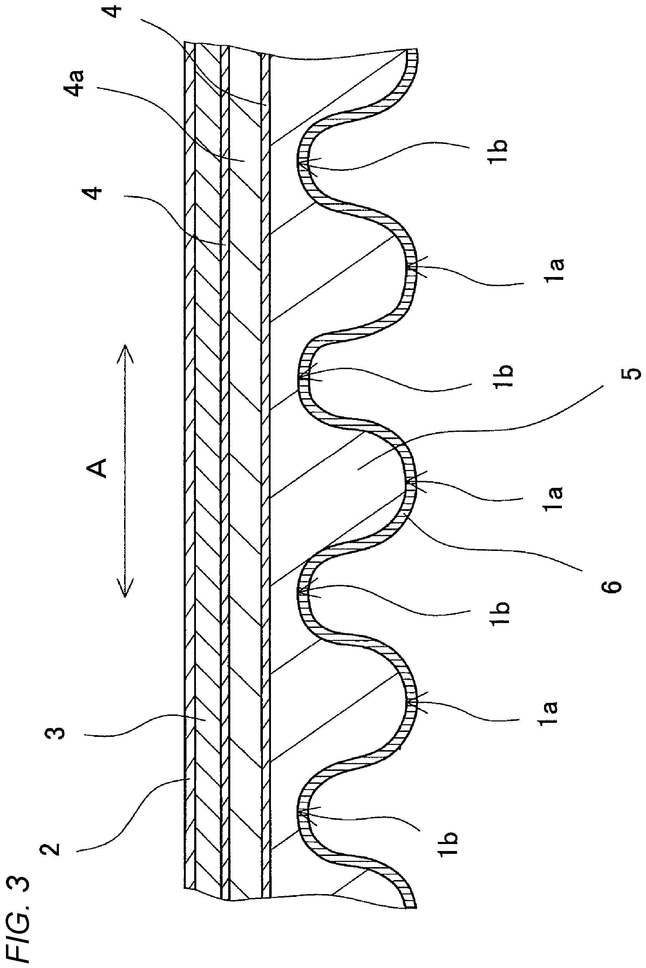

FIG. 2 is a schematic perspective cross-sectional view illustrating an example of the power-transmission belt (raw-edge cogged V-belt) of the present invention, and FIG. 3 is a schematic cross-sectional view of the power-transmission belt in FIG. 2 cut in a belt longitudinal direction.

In this example, a power-transmission belt 1 has a plurality of cog ridge portions 1a formed at a predetermined interval along the belt longitudinal direction (direction A in the drawing) on an inner circumferential surface of a belt main body. A cross-sectional shape of the cog ridge portions 1a in the longitudinal direction is formed to be substantially semicircular (curved or wavy). A cross-sectional shape in a direction (width direction or B direction in the drawing) perpendicular to the longitudinal direction is formed into a trapezoid shape in which a belt width decreases from an outer circumferential side toward an inner circumferential side of the belt (toward a cog ridge portion 1a side). That is, each of the cog ridge portions 1a protrudes from a cog bottom portion 1b in a belt thickness direction with a cross-sectional shape in the longitudinal direction (direction A) of substantially semicircular, and protruding protrusions each having a substantially semicircular cross-section are continuous along the longitudinal direction (direction A).

The power-transmission belt 1 has a laminated structure, and reinforcing fabric 2, a tension rubber layer 3, a tension member layer 4, a compression rubber layer 5, and reinforcing fabric (reinforcing fabric covering the cog ridge portions 1a and the cog bottom portions 1b) 6 are sequentially laminated from the outer circumferential side toward the inner circumferential side (side on which the cog ridge portions 1a are formed) of the belt. That is, the tension rubber layer 3 and the compression rubber layer 5 are laminated via the tension member layer 4, and the reinforcing fabric 2 and the reinforcing fabric 6 are laminated on the tension rubber layer 3 and the compression rubber layer 5, respectively. Furthermore, tension members 4a are embedded in the tension member layer 4, and cog portions (cog ridge portions 1a and cog bottom portions 1b) are formed at the compression rubber layer 5 by a molding die with a cog.

In the power-transmission belt of the present invention, the compression rubber layer is formed of the rubber composition (crosslinked rubber composition) of the present invention, and the tension rubber layer, the tension member layer, the tension member, and the reinforcing fabric are not particularly limited, but may be the tension rubber layer, the tension member layer, the tension member, and the reinforcing fabric shown below.

(Tension Rubber Layer)

The tension rubber layer can be formed of a rubber composition containing components selected from the rubber components, short fibers, adhesiveness improvers, carbon black, and additives exemplified in the rubber composition for forming the compression rubber layer. The tension rubber layer may be a layer formed of the same rubber composition as those of the compression rubber layer.

(Tension Member Layer)

The tension member layer may include a tension member, and may be a tension member layer formed only of a tension member, but it is preferable that the tension member layer is a tension member layer (adhesion rubber layer) formed of a crosslinked rubber composition in which the tension member is embedded from a viewpoint of preventing peeling between layers and improving the durability of the belt. The adhesion rubber layer is interposed between the tension rubber layer and a compression rubber layer main body to adhere the tension rubber layer and the compression rubber layer main body, and the tension member may be embedded in the adhesion rubber layer.

(Adhesion Rubber Layer)

The rubber composition for forming the adhesion rubber layer may contain, similar to the rubber composition for forming the compression rubber layer, the chloroprene rubber, crosslinking agents (metal oxides such as magnesium oxide and zinc oxide, and the like), co-crosslinking agents (maleimide-based crosslinking agents such as N,N'-m-phenylene dimaleimide, and the like), crosslinking accelerators (TMTD, DPTT, CBS, and the like), carbon black, softening agents (oils such as naphthenic oil, aromatic carboxylic acid alkyl esters, and the like), processing agents or processing aids (stearic acid, metal stearates, wax, paraffin, and the like), anti-aging agents, adhesiveness improvers (resorcinol resin, amino resin, and the like), fillers (silica, clay, calcium carbonate, talc, mica, and the like), colorants, tackifiers, plasticizers, coupling agents (silane coupling agents and the like), stabilizers (ultraviolet absorbers, thermal stabilizers, and the like), flame retardants, antistatic agents, or the like.

In the rubber composition, proportions of the crosslinking agent, the co-crosslinking agent, the crosslinking accelerator, the softening agent, the processing agent or processing aid, and the anti-aging agent can be selected from the same ranges as those of the rubber composition for forming the compression rubber layer.

A proportion of the adhesiveness improver (second adhesiveness improver) in the rubber composition for forming the adhesion rubber layer is, for example, 0.5 parts by mass to 10 parts by mass, preferably 1 part by mass to 9 parts by mass, furthermore preferably 2 parts by mass to 8 parts by mass, more preferably 3 parts by mass to 7 parts by mass, and most preferably 4 parts by mass to 6 parts by mass with respect to 100 parts by mass of the chloroprene rubber.

A proportion of the carbon black (second carbon black) in the rubber composition for forming the adhesion rubber layer may be 5 parts by mass or more, and is, for example, 5 parts by mass to 100 parts by mass, preferably 10 parts by mass to 100 parts by mass, furthermore preferably 15 parts by mass to 50 parts by mass, and more preferably 20 parts by mass to 40 parts by mass with respect to 100 parts by mass of the chloroprene rubber.

(Tension Member)

The tension member is not particularly limited, and cords (twisted cords) arranged at a predetermined interval in the belt width direction can be usually used. The cords are arranged in the belt longitudinal direction, and although a plurality of cords may be arranged parallel to the belt longitudinal direction, from the viewpoint of productivity, the cords are usually arranged in parallel in a spiral shape, extending substantially parallel to the belt longitudinal direction of the raw-edge cogged V-belt at a predetermined pitch. When the cords are arranged in a spiral shape, an angle of the cord with respect to the belt longitudinal direction may be, for example, 5° or less, and it is more preferable that the angle be closer to 0° from a viewpoint of belt running performance. The pitch of the cords is preferably set in a range of 0.5 mm to 3.0 mm, more preferably in a range of 0.8 mm to 2.0 mm, and most preferably in a range of 1.0 mm to 1.6 mm.

At least a part of the cord is in contact with the adhesion rubber layer, and the cord may be in any form of a form in which the cord is embedded in the adhesion rubber layer, a form in which the cord is embedded between the adhesion rubber layer and the tension rubber layer, and a form in which the cord is embedded between the adhesion rubber layer and the compression rubber layer. Among these, the form in which the cord is embedded in the adhesion rubber layer is preferable from the viewpoint of improving the durability.

Examples of the fiber constituting the cord include the same fiber as the short fiber. Among the fibers, a synthetic fiber such as a polyester fiber (polyalkylene arylate fiber) having $C_{2-4}$ alkylene-$C_{8-12}$ allylate such as ethylene terephthalate and ethylene-2,6-naphthalate as a main structural unit and an aramid fiber, an inorganic fiber such as a carbon fiber, and the like are widely used from the viewpoint of high modulus, and the polyester fiber (a polyethylene terephthalate fiber, a polyethylene naphthalate fiber) and the aramid fiber are preferred. These fibers may be used in the form of a multifilament yarn including a plurality of filaments. Fineness of the multifilament yarn is, for example, 200 dtex to 5000 dtex (particularly 500 dtex to 2000 dtex). The multifilament yarn may include, for example, 100 filaments to 5000 filaments, preferably 500 filaments to 4000 filaments, and furthermore preferably 1000 filaments to 3000 filaments. When the cord is composed of a polyester fiber, the multifilament yarn may include, for example, 50 filaments to 1500 filaments, preferably 100 filaments to 1000 filaments, and furthermore preferably 300 filaments to 500 filaments.

As the cord, generally, a twisted cord including a multifilament yarn (for example, a plied cord, a single twisted cord or Lang twisted cord) can be used. A total fineness of the cord (twisted cord) is, for example, 3000 dtex to 30000 dtex, preferably 4000 dtex to 15000 dtex, and furthermore preferably 5000 dtex to 8000 dtex. The cord (twisted cord) may include, for example, 1000 filaments to 15000 filaments, preferably 2000 filaments to 10000 filaments, and furthermore preferably 5000 filaments to 7000 filaments. When the cord is composed of a polyester fiber, the cord may include, for example, 500 filaments to 12000 filaments, preferably 1000 filaments to 5000 filaments, and furthermore preferably 2000 filaments to 3000 filaments. An average wire diameter of the cord (diameter of twisted cord) may be, for example, 0.5 mm to 3 mm, preferably 0.6 mm to 2 mm, and furthermore preferably 0.7 mm to 1.5 mm.

In order to improve the adhesiveness to the chloroprene rubber, the cord may be subjected to an adhesion treatment or a surface treatment in the same manner as the short fiber. Similarly to the short fiber, the cord is preferably subjected to the adhesion treatment with at least the RFL liquid.

(Reinforcing Fabric)

The reinforcing fabric may be laminated on the surface of the compression rubber layer and/or the tension rubber layer. The reinforcing fabric can be formed by laminating a fabric material (preferably woven fabric) such as woven fabric, wide-angle canvas fabric, knitted fabric, or nonwoven fabric on the surface of the compression rubber layer and/or the tension rubber layer. If necessary, the reinforcing fabric may be laminated on the surface of the compression rubber layer and/or the tension rubber layer after the adhesion treatment, for example, a treatment with the RFL liquid (immersion treatment or the like), a friction treatment in which an adhesion rubber is rubbed into the fabric material, or lamination of the adhesion rubber and the fabric material.

(Method for Manufacturing Power-Transmission Belt)

A method for manufacturing the power-transmission belt (for example, raw-edge cogged V-belt) of the present invention is not particularly limited, and for a lamination step of each layer (a method for producing a belt sleeve), a commonly-used method can be used depending on the type of belt.

For example, a typical method for manufacturing a raw-edge cogged V-belt will be described below. First, a laminate of the reinforcing fabric (lower fabric) and a compression rubber layer sheet (uncrosslinked rubber sheet) is disposed, with the reinforcing fabric facing down, in contact with a flat mold with a cog in which tooth portions and groove portions corresponding to the cog portions (cog ridge portions 1a and cog bottom portions 1b shown in FIG. 2) are alternately arranged. Then, a cog pad (pad that is not completely crosslinked, but is in a semi-crosslinked state) is produced by pressing the cog portions at a temperature of about 60°C to 100°C (particularly 70°C to 80°C). Then, both ends of the cog pad may be cut perpendicularly from an appropriate position (particularly, top portion of cog ridge portion).

Next, an outer circumference of a cylindrical mold is covered with an inner mother mold in which tooth portions and groove portions corresponding to the cog portions are alternately arranged, and the cog pad is wound by engaging with the tooth portions and the groove portions of the inner mother mold to join at both ends (particularly, at the top portion of the cog ridge portion). Then, after laminating a first adhesion rubber layer sheet (lower adhesion rubber: uncrosslinked rubber sheet) on an outer circumference of the cog pad, the cord (twisted cord) that forms the tension member is spun spirally. Then, a second adhesion rubber layer sheet (upper adhesion rubber: uncrosslinked rubber sheet), a tension rubber layer sheet (uncrosslinked rubber sheet), and upper fabric are sequentially wound around the outer circumference to produce an uncrosslinked molded product.

Thereafter, the uncrosslinked molded product is covered with a jacket and placed in a well-known crosslinking device (for example, a vulcanization can), and crosslinking molding is conducted at a temperature of 120°C to 200°C (particularly, 150°C to 180°C) to produce a crosslinked belt sleeve. Then, a cutter or the like is used to cut the crosslinked belt sleeve into a V shape to obtain an endless raw-edge cogged V-belt.

The method for manufacturing the power-transmission belt of the present invention includes a kneading step of kneading the rubber composition of the present invention to manufacture an uncrosslinked rubber sheet for forming a compression rubber layer, and even though the rubber composition contains the adhesiveness improver, the rubber composition does not stick to a kneader in the kneading step, and the uncrosslinked rubber sheet can be smoothly manufactured.

Example

Hereinafter, the present invention will be described in more detail based on Examples, but the present invention is not limited to these Examples. Details of materials used in Examples, a method for producing the uncrosslinked rubber sheet, and a method for measuring or evaluating each of physical properties are shown below.

[Use Material]

(Rubber Component)

Chloroprene rubber: "PM-40" manufactured by Denka Co., Ltd.

(Short Fiber)

The short fiber used the following short fibers. All short fibers were subjected to an adhesion treatment in which the short fibers were immersed in an RFL liquid [mixture of 2.6 parts by mass of resorcinol, 1.4 parts by mass of 37 mass% formalin, 17.2 parts by mass of vinylpyridine-styrene-butadiene copolymer latex (manufactured by Nippon Zeon Co., Ltd.), and 78.8 parts by mass of water], and dried. An adhesion rate of an adhesive component (solid content) was adjusted to 6 mass% with respect to the short fibers.

Meta-aramid short fiber: "Conex" manufactured by Teijin Limited, fiber length: 3 mm
Para-aramid short fiber A: "Twaron (registered trademark)" manufactured by Teijin Limited, fiber length: 3 mm
Para-aramid short fiber B: "Twaron (registered trademark)" manufactured by Teijin Limited, fiber length: 1 mm
Nylon 66 short fiber A: "Leona" manufactured by Asahi Kasei Corporation, fiber length: 3 mm
Nylon 66 short fiber B: "Leona" manufactured by Asahi Kasei Corporation, fiber length: 1 mm

(Filler)

Carbon black FEF: "SEAST SO" manufactured by Tokai Carbon Co., Ltd.
Carbon black ISAF: " SEAST 6" manufactured by Tokai Carbon Co., Ltd.
Silica: "Nipsil VN3" manufactured by Tosoh Silica Co., Ltd.

(Additive)

Zinc powder: "M-11" manufactured by Sakai Chemical Industry Co., Ltd.
Naphthenic oil: "Diana Process Oil NS-90S" manufactured by Idemitsu Kosan Co., Ltd.
Adhesiveness improver A (resorcinol-formaldehyde co-condensate): "POWERPLAST PP-1860" manufactured by Singh Plasticisers & Resins
Adhesiveness improver B (hexamethoxymethyl melamine): "POWERPLAST PP-1890S" manufactured by Singh Plasticisers & Resins
Adhesiveness improver C (cresol-formaldehyde co-condensate): "Sumikanol 610" manufactured by Taoka Chemical Co., Ltd.
Adhesiveness improver D (novolac-based phenol resin): "Sumilite Resin PR-12687" manufactured by Sumitomo Bakelite Co., Ltd.
Magnesium oxide: "Kyowa Mag 150" manufactured by Kyowa Chemical Industry Co., Ltd.
Crosslinking accelerator MBTS (dibenzothiazyl disulfide): "Nocceler DM" manufactured by Ouchi Shinko Chemical Industrial Co., Ltd.
Crosslinking accelerator TMTD (tetramethylthiuram disulfide): "Nocceler TT" manufactured by Ouchi Shinko Chemical Industrial Co., Ltd.
Anti-aging agent A (octyl diphenylamine): "Nonflex OD-3" manufactured by Seiko Chemical Co., Ltd.
Anti-aging agent B (4,4'-bis($\alpha,\alpha$-dimethylbenzyl)diphenylamine): "Nonflex DCD" manufactured by Seiko Chemical Co., Ltd.
Anti-aging agent C (microcrystalline wax): "Suntight C" manufactured by Seiko Chemical Co., Ltd.
Softening agent: "Adeka Cizer C-8" manufactured by ADEKA Corporation
Stearic acid: "Beads Stearic acid TSUBAKI" manufactured by NOF Corporation
Zinc oxide: "zinc oxide (JIS standard type II)" manufactured by Hakusui Tech Co., Ltd.
Co-crosslinking agent (N,N'-m-phenylene dimaleimide): "Vulnoc PM" manufactured by Ouchi Shinko Chemical Industrial Co., Ltd.

(Cord)

Two PET fiber bundles of 1100 dtex were combined and primarily twisted at a twist coefficient of 3.0 to obtain a primarily twisted yarn. A plied twisted cord with a total fineness of 6600 dtex in which three primarily twisted yarns were combined and secondary twisted with a twist coefficient of 3.0 was used as the cord. The cord was subjected to the same adhesion treatment as that of the short fiber.

(Reinforcing Fabric)

Canvas fabric (areal weight: 180 g/m$^2$) was obtained by plain weaving 10-count cotton yarns with a yarn density of 70 yarns/50 mm. Treated canvas fabric (thickness: about 0.5 mm, areal weight: 450 g/m$^2$) obtained by rubbing the rubber composition for the adhesion rubber layer to the canvas fabric was used as the reinforcing fabric. The same reinforcing fabric was used for both the inner circumferential side and the outer circumferential side of the belt.

[Presence or Absence of Adhesion in Kneading Step]

When the rubber composition was kneaded with a closed type kneader (Banbury mixer), the presence or absence of adhesion of the rubber composition to the kneader was evaluated. If the rubber composition was automatically discharged from the kneader, it was determined that there was no adhesion (good), and if the rubber composition stuck to the kneader had to be peeled off with a hand hook, it was determined that there was adhesion (problem).

[Friction Coefficient]

The rubber composition was press-heated at a temperature of 160°C and a pressure of 0.9 MPa for 20 minutes to produce a crosslinked rubber sheet having a thickness of 2 mm. A disk-shaped test piece having a diameter of 8 mm and a thickness of 2 mm was taken from the crosslinked rubber sheet, and a friction force was measured using a pin-on-disk friction coefficient measuring device to calculate the friction coefficient. Specifically, the test piece was pressed with a load of 2.192 kgf/cm$^2$ by a mating material (SUS304) having a surface roughness Ra of 0.8 $\mu$m, and the friction force was measured at a friction speed of 0 m/sec to 2.0 m/sec. Tables 3 to 5 show relatives when a friction coefficient of Comparative Example 1 is set to 100. The smaller this value, the more the wear resistance and fuel consumption saving properties of the power-transmission belt tend to improve.

[8% Bending Stress (Short Fiber Orthogonal Direction)]

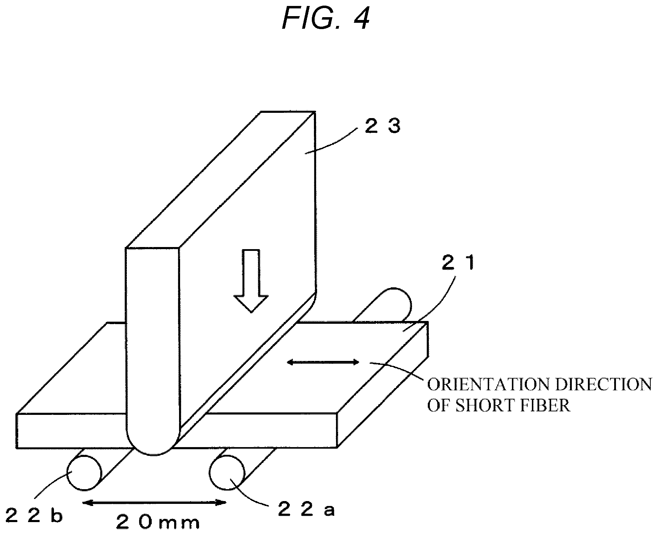

An uncrosslinked rubber composition having the composition shown in Tables 3 to 5 was press-heated at a temperature of 160°C, a pressure of 0.9 MPa for 20 minutes to produce a crosslinked rubber molded product (60 mm × 25 mm × 6.5 mm in thickness). The short fiber was oriented parallel to a longitudinal direction of the crosslinked rubber molded product. As illustrated in FIG. 4, a crosslinked rubber molded product 21 was placed and supported on a pair of rotatable rolls (diameter of 6 mm) 22a and 22b with an interval of 20 mm, and a metal pressure member 23 was placed on a central portion of an upper surface of the crosslinked rubber molded product in a width direction (direction orthogonal to the orientation direction of the short fiber). A tip of the pressure member 23 has a semi-circular shape having a diameter of 10 mm, and the crosslinked rubber molded product 21 can be smoothly pressed by the tip. During pressing, a friction force acts between a lower surface of the crosslinked rubber molded product 21 and the rolls 22a and 22b with compression deformation of the crosslinked rubber molded product 21, but an influence due to the friction is minimized by setting the rolls 22a and 22b rotatable. A state in which the tip of the pressure member 23 was in contact with but did not press against an upper surface of the crosslinked rubber molded product 21 was set as an initial position. From this state, the pressure member 23 was pressed downward against the upper surface of the crosslinked rubber molded product 21 at a speed of 100 mm/min, and the stress when a bending strain reached 8% was measured as the bending stress. A measurement temperature was set to 120°C assuming to be a belt temperature during running. It can be determined that the greater the 8% bending stress in the short fiber orthogonal direction, the higher the resistance to buckling deformation (dishing) during belt running, and the more excellent the wear resistance and the fuel consumption saving properties. 6.3 MPa or higher was determined as a practical pass level.

[Bending Fatigue Resistance (De mattia Flex Test)]

A measurement method was in accordance with JIS K6260:2017 (a method for determining bending crack resistance and bending crack growth resistance of a vulcanized rubber and a thermoplastic rubber (De mattia method)). A test piece (crosslinked rubber molded product) having a length of 140 mm, a width of 25 mm, a thickness of 6.3 mm, and a semicircular recess with a radius of curvature of 2.38 mm in the center of the length direction was prepared by crosslinking the rubber composition using a mold. The short fiber was oriented such that a length direction of the short fiber was parallel to the length direction of the test piece. The test method adopted a bending crack generation test, which measured the number of times of bending until a crack having a predetermined length occurred when the test piece was repeatedly bent and deformed without being cut. A maximum distance between grips of a De mattia bending tester was 75 mm, a distance for reciprocating motion (stroke) was 57 mm, a speed for reciprocating motion was 300 times per minute, and a measurement temperature (ambient temperature) was 120°C. When the number of times of bending reached a predetermined number of times, the tester was temporarily stopped such that the distance between the grips was 65 mm, and occurrence of a crack and the length of the crack (the length in the width direction of the test piece) were confirmed. The test was ended when the length of the crack reached 3 mm. Tables 3 to 5 show relative values when the number of times of bending at which the length of the crack of Comparative Example 1 reached 3 mm is set to 100. It can be determined that the larger this value, the more excellent the bending fatigue resistance (crack resistance).

[Power-Transmission Efficiency (Efficiency of Power-Transmission)]

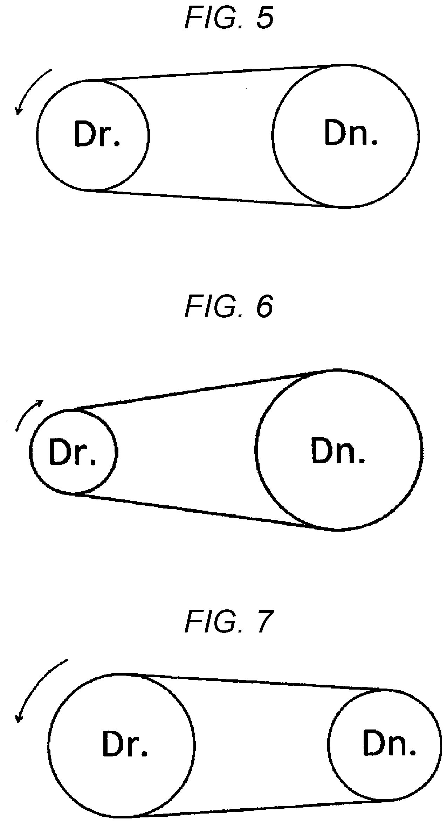

As illustrated in FIG. 5, a power-transmission efficiency test was performed using a biaxial running test machine including a driving (Dr.) pulley connected to a driving shaft and having a diameter $\varphi$ of 95 mm, a driven (Dn.) pulley connected to a driven shaft and having a diameter $\varphi$ of 110 mm. The driving shaft and the driven shaft are connected to a motor and equipped with a torque meter and a digital tachometer, and a rotation speed and a torque can be adjusted. A raw-edge cogged V-belt was wound around each pulley, and tension was applied to the belt by an axial load of 300 N. The rotation speed of the driving pulley was adjusted to about 3,000 rpm and the torque was adjusted to 2 Nm, and the torques and the rotation speeds of the driving shaft and driven shaft were measured. The measurement temperature (ambient temperature) was 25°C.

As shown in the following formula, power $P_1$ of the driving shaft can be calculated as a product of a torque $T_1$ and a rotation speed $\rho_1$ of the driving shaft. Similarly, power $P_2$ of the driven shaft can be calculated as a product of a torque $T_2$ and a rotation speed $\rho_2$ of the driven shaft. Transmission efficiency $\eta$ can be calculated by dividing the power of the driven shaft by the power of the driving shaft.

$$P_1 = T_1 \times \rho_1$$
$$P_2 = T_2 \times \rho_2$$
$$\eta = P_2/P_1 = (T_2 \times \rho_2)/(T_1 \times \rho_1)$$

A value of the power-transmission efficiency is 1 if there is no transmission loss, and if there is a transmission loss, the value is smaller by an amount of the loss. That is, the closer the value of the power-transmission efficiency is to 1, the smaller the transmission loss of the belt and the more excellent the fuel consumption saving properties.

Tables 3 to 5 show relative values when the power-transmission efficiency of Comparative Example 1 is set to 100, and if this value is 90 or larger, fuel consumption saving properties are determined to be excellent (practical pass level).

[Wear Durability Test (Change in Upper Width)]

As illustrated in FIG. 6, a wear durability test was performed using a biaxial running test machine including a driving (Dr.) pulley having a diameter of 60 mm and a driven (Dn.) pulley having a diameter of 145 mm. The raw-edge cogged V-belt was wound around the two pulleys, and the belt ran for 20 hours at an ambient temperature of 60°C, an axial load of 1000 N, a rotation speed of the driving pulley of 6500 rpm, and a load of the driven pulley of 15 N·m. An upper width of the belt before and after running was measured, and if an amount of change in the upper width (wear loss) was less than 0.4 mm, the wear resistance was determined to be excellent (practical pass level).

[Crack Durability Test (Crack Depth)]

As illustrated in FIG. 7, a crack durability test was performed using a biaxial running test machine including a driving (Dr.) pulley having a diameter of 115 mm and a driven (Dn.) pulley having a diameter of 95 mm. The raw-edge cogged V-belt was wound around the two pulleys, and the belt ran for 96 hours at an ambient temperature of 100°C, an axial load of 500 N, a rotation speed of the driving pulley of 9000 rpm, and a load of the driven pulley of 10 N·m. A crack depth (length in the belt thickness direction) that occurred in a cog valley of the belt after running was measured, and if the crack depth was less than 3 mm, it was determined that the belt had excellent crack resistance (practical pass level).

Examples 1 to 20 and Comparative Examples 1 to 10

(Formation of Rubber Layer)

The rubber compositions in Table 2 (adhesion rubber layer) and Tables 3 to 5 (compression rubber layer and tension rubber layer) were subjected to rubber kneading by using a well-known method such as a Banbury mixer, and the kneaded rubber obtained was passed through a calendar roll to produce rolled rubber sheets (adhesion rubber layer sheet, compression rubber layer sheet, tension rubber layer sheet).

(Manufacturing of Belt)

A laminate of reinforcing fabric (lower fabric) and a compression rubber layer sheet (uncrosslinked rubber) was placed, with the reinforcing fabric facing down, on a flat mold with a cog in which tooth portions and groove portions corresponding to the cog portions were alternately arranged. A cog pad (which was not completely crosslinked, but was in a semi-crosslinked state) molded with the cog portion was produced by pressing the laminate at 75°C. Next, both ends of the cog pad were cut vertically from the top portion of the cog ridge portion.

Next, the cylindrical mold was covered with the inner mother mold in which the tooth portions and the groove portions corresponding to the cog portions were alternately arranged, and the cog pad was wound by engaging with the tooth portions and the groove portions of the inner mother mold to join at the top portion of the cog ridge portion. The first adhesion rubber layer sheet (same as the lower adhesion rubber, uncrosslinked rubber, and adhesion rubber layer sheet) was laminated on the outer circumferential of the wound cog pad, the cord was spun spirally (pitch of cord: 1.1 mm), and the second adhesion rubber layer sheet (same as the upper adhesion rubber and the adhesion rubber layer sheet), the tension rubber layer sheet (uncrosslinked rubber), and the upper fabric were sequentially wound around the outer circumference to produce an uncrosslinked molded product.

Thereafter, the uncrosslinked molded product was covered with a jacket, and the mold was placed in a vulcanization can, and crosslinking molding was performed at a temperature of 160°C for 20 minutes to obtain a belt sleeve. This belt sleeve was cut with a cutter into a V-shaped cross section of a predetermined width in the belt longitudinal direction. Then, this belt sleeve was finished into a belt having a structure shown in FIG. 2, that is, a raw-edge cogged V-belt (size: upper width of 23.5 mm, thickness of 11.0 mm, outer circumferential length of 850 mm), which is a variable speed belt having cogs on the inner circumferential side of the belt.

Evaluation results of the belts obtained in Examples and Comparative Examples are shown in Tables 3 to 5.

Table 2 (rubber composition for adhesion rubber layer)

| Composition (part by mass) | |
|---|---|
| Chloroprene rubber | 100 |
| Carbon black FEF | 30 |
| Silica | 20 |
| Naphthenic oil | 5 |
| Magnesium oxide | 4 |
| Anti-aging agent A | 4 |
| Zinc oxide | 5 |
| Crosslinking accelerator TMTD | 1 |
| Co-crosslinking agent | 2 |
| Stearic acid | 2 |
| Adhesiveness improver A | 1.5 |
| Adhesiveness improver B | 3.5 |
| Total | 178 |

Table 3

| | | Example | | | | | | | | | |
|---|---|---|---|---|---|---|---|---|---|---|---|
| | | 1 | 2 | 3 | 4 | 5 | 6 | 7 | 8 | 9 | 10 |
| Chloroprene rubber | | 100 | 100 | 100 | 100 | 100 | 100 | 100 | 100 | 100 | 100 |
| Carbon black FEF | | 50 | 50 | 50 | - | 50 | 50 | 50 | 50 | 50 | 50 |
| Carbon black ISAF | | - | - | - | 50 | - | - | - | - | - | - |
| Adhesiveness improver A | | - | - | - | - | - | - | - | - | - | - |
| Adhesiveness improver B | | - | - | - | - | - | - | - | - | - | - |
| Adhesiveness improver C | | 1 | 0.25 | 3 | 1 | 1 | 1 | 1 | 1 | 1 | 1 |
| Adhesiveness improver D | | - | - | - | - | - | - | - | - | - | - |
| Magnesium oxide | | 4 | 4 | 4 | 4 | 4 | 4 | 4 | 4 | 4 | 4 |
| Crosslinking accelerator MBTS | | 0.75 | 0.75 | 0.75 | 0.75 | 0.75 | 0.75 | 0.75 | 0.75 | 0.75 | 0.75 |
| Anti-aging agent A | | 4 | 4 | 4 | 4 | 4 | 4 | 4 | 4 | 4 | 4 |
| Anti-aging agent B | | 2 | 2 | 2 | 2 | 2 | 2 | 2 | 2 | 2 | 2 |
| Anti-aging agent C | | 2 | 2 | 2 | 2 | 2 | 2 | 2 | 2 | 2 | 2 |
| Zinc powder | | 10 | 10 | 10 | 10 | 10 | 10 | 10 | 10 | 10 | 10 |
| Softener | | 5 | 5 | 5 | 5 | 5 | 5 | 5 | 5 | 5 | 5 |
| Stearic acid | | 2 | 2 | 2 | 2 | 2 | 2 | 2 | 2 | 2 | 2 |
| Zinc oxide | | 5 | 5 | 5 | 5 | 5 | 5 | 5 | 5 | 5 | 5 |
| Co-crosslinking agent | | 6 | 6 | 6 | 6 | 6 | 6 | 6 | 6 | 6 | 6 |
| Meta-aramid short fiber | | - | - | - | - | - | - | 25 | - | - | 15 |
| Para-aramid short fiber A | | 15 | 15 | 15 | 15 | 25 | 10 | - | 25 | 15 | - |
| Para-aramid short fiber B | | - | - | - | - | - | - | - | - | - | - |
| Nylon 66 short fiber A | | 10 | 10 | 10 | 10 | 10 | 20 | - | - | - | 10 |
| Nylon 66 short fiber B | | - | - | - | - | - | - | - | - | 10 | - |
| Presence or Absence of adhesion in kneading step | | Absent | Absent | Absent | Absent | Absent | Absent | Absent | Absent | Absent | Absent |

(continued)

| | Example | | | | | | | | | |
|---|---|---|---|---|---|---|---|---|---|---|
| | 1 | 2 | 3 | 4 | 5 | 6 | 7 | 8 | 9 | 10 |
| Friction coefficient (relative value) | 100 | 100 | 100 | 103 | 105 | 95 | 90 | 110 | 100 | 95 |
| 8% bending rigidity (MPa) | 6.6 | 6.5 | 6.6 | 7.2 | 8.5 | 6.3 | 9.0 | 8.0 | 6.5 | 7.0 |
| Bending fatigue resistance (relative value) | 130 | 120 | 135 | 115 | 108 | 109 | 118 | 104 | 115 | 123 |
| Power-transmission efficiency (relative value) | 100 | 100 | 100 | 97 | 95 | 105 | 111 | 91 | 100 | 105 |
| Change in upper width (mm) | 0.25 | 0.26 | 0.25 | 0.22 | 0.20 | 0.35 | 0.15 | 0.20 | 0.25 | 0.24 |
| Crack depth (mm) | 1.4 | 1.6 | 1.3 | 1.9 | 2.5 | 2.5 | 1.8 | 2.5 | 1.9 | 1.7 |

Table 4

| | Example | | | | | | | | | |
|---|---|---|---|---|---|---|---|---|---|---|
| | 11 | 12 | 13 | 14 | 15 | 16 | 17 | 18 | 19 | 20 |
| Chloroprene rubber | 100 | 100 | 100 | 100 | 100 | 100 | 100 | 100 | 100 | 100 |
| Carbon black FEF | 30 | 70 | 50 | 50 | 50 | 50 | 50 | 50 | 50 | 50 |
| Carbon black ISAF | - | - | - | - | - | - | - | - | - | - |
| Adhesiveness improver A | - | - | 1 | - | - | - | - | - | - | - |
| Adhesiveness improver B | - | - | - | 1 | - | - | - | - | - | - |
| Adhesiveness improver C | 1 | 1 | - | - | - | 1 | 1 | 1 | 1 | 1 |
| Adhesiveness improver D | - | - | - | - | 1 | - | - | - | - | - |
| Magnesium oxide | 4 | 4 | 4 | 4 | 4 | 4 | 4 | 4 | 4 | 4 |
| Crosslinking accelerator MBTS | 0.75 | 0.75 | 0.75 | 0.75 | 0.75 | 0.75 | 0.75 | 0.75 | 0.75 | 0.75 |
| Anti-aging agent A | 4 | 4 | 4 | 4 | 4 | 4 | 4 | 4 | 4 | 4 |
| Anti-aging agent B | 2 | 2 | 2 | 2 | 2 | 2 | 2 | 2 | 2 | 2 |
| Anti-aging agent C | 2 | 2 | 2 | 2 | 2 | 2 | 2 | 2 | 2 | 2 |
| Zinc powder | 10 | 10 | 10 | 10 | 10 | 10 | 10 | 10 | 10 | 10 |

(continued)

| | Example | | | | | | | | | |
|---|---|---|---|---|---|---|---|---|---|---|
| | 11 | 12 | 13 | 14 | 15 | 16 | 17 | 18 | 19 | 20 |
| Softener | 5 | 5 | 5 | 5 | 5 | 5 | 5 | 5 | 5 | 5 |
| Stearic acid | 2 | 2 | 2 | 2 | 2 | 2 | 2 | 2 | 2 | 2 |
| Zinc oxide | 5 | 5 | 5 | 5 | 5 | 5 | 5 | 5 | 5 | 5 |
| Co-crosslinking agent | 6 | 6 | 6 | 6 | 6 | 6 | 6 | 6 | 6 | 6 |
| Meta-aramid short fiber | - | - | - | - | - | - | - | - | - | - |
| Para-aramid short fiber A | 15 | 15 | 15 | 15 | 15 | - | 5 | 25 | 15 | 5 |
| Para-aramid short fiber B | - | - | - | - | - | 15 | - | - | - | - |
| Nylon 66 short fiber A | 10 | 10 | 10 | 10 | 10 | 10 | 30 | 5 | 15 | 25 |
| Nylon 66 short fiber B | - | - | - | - | - | - | - | - | - | - |
| Presence or Absence of adhesion in kneading step | Absent | Absent | Absent | Absent | Absent | Absent | Absent | Absent | Absent | Absent |
| Friction coefficient (relative value) | 100 | 100 | 100 | 100 | 100 | 100 | 87 | 103 | 97 | 92 |
| 8% bending stress (MPa) | 6.3 | 7.0 | 6.7 | 6.6 | 6.6 | 6.6 | 6.4 | 8.0 | 7.5 | 6.3 |
| Bending fatigue resistance (relative value) | 130 | 110 | 130 | 130 | 130 | 110 | 105 | 107 | 110 | 105 |
| Power-transmission efficiency (relative value) | 105 | 95 | 100 | 100 | 100 | 100 | 108 | 97 | 103 | 107 |
| Change in upper width (mm) | 0.36 | 0.15 | 0.24 | 0.25 | 0.25 | 0.25 | 0.38 | 0.23 | 0.20 | 0.37 |
| Crack depth (mm) | 1.3 | 2.6 | 1.3 | 1.5 | 1.4 | 2.2 | 2.7 | 2.4 | 2.1 | 2.5 |

Table 5

| | Comparative Example | | | | | | | | | |
|---|---|---|---|---|---|---|---|---|---|---|
| | 1 | 2 | 3 | 4 | 5 | 6 | 7 | 8 | 9 | 10 |
| Chloroprene rubber | 100 | 100 | 100 | 100 | 100 | 100 | 100 | 100 | 100 | 100 |
| Carbon black FEF | 50 | 50 | 50 | 50 | 50 | 50 | 75 | 25 | 50 | 50 |
| Carbon black ISAF | - | - | - | - | - | - | - | - | - | - |

(continued)

| | Comparative Example | | | | | | | | | |
|---|---|---|---|---|---|---|---|---|---|---|
| | 1 | 2 | 3 | 4 | 5 | 6 | 7 | 8 | 9 | 10 |
| Adhesiveness improver A | - | - | - | - | - | - | - | - | - | - |
| Adhesiveness improver B | - | - | - | - | - | - | - | - | - | - |
| Adhesiveness improver C | - | 3.25 | 1 | 1 | - | - | 1 | 1 | 0.05 | 1 |
| Adhesiveness improver D | - | - | - | - | - | - | - | - | - | - |
| Magnesium oxide | 4 | 4 | 4 | 4 | 4 | 4 | 4 | 4 | 4 | 4 |
| Crosslinking accelerator MBTS | 0.75 | 0.75 | 0.75 | 0.75 | 0.75 | 0.75 | 0.75 | 0.75 | 0.75 | 0.75 |
| Anti-aging agent A | 4 | 4 | 4 | 4 | 4 | 4 | 4 | 4 | 4 | 4 |
| Anti-aging agent B | 2 | 2 | 2 | 2 | 2 | 2 | 2 | 2 | 2 | 2 |
| Anti-aging agent C | 2 | 2 | 2 | 2 | 2 | 2 | 2 | 2 | 2 | 2 |
| Zinc powder | 10 | 10 | 10 | 10 | 10 | 10 | 10 | 10 | 10 | 10 |
| Softening agent | 5 | 5 | 5 | 5 | 5 | 5 | 5 | 5 | 5 | 5 |
| Stearic acid | 2 | 2 | 2 | 2 | 2 | 2 | 2 | 2 | 2 | 2 |
| Zinc oxide | 5 | 5 | 5 | 5 | 5 | 5 | 5 | 5 | 5 | 5 |
| Co-crosslinking agent | 6 | 6 | 6 | 6 | 6 | 6 | 6 | 6 | 6 | 6 |
| Meta-aramid short fiber | - | - | - | - | 25 | 15 | - | - | - | - |
| Para-aramid short fiber A | 15 | 15 | 30 | 20 | - | - | 15 | 15 | 15 | - |
| Para-aramid short fiber B | - | - | - | - | - | - | - | - | - | - |
| Nylon 66 short fiber A | 10 | 10 | - | 20 | - | - | 10 | 10 | 10 | 30 |
| Nylon 66 short fiber B | - | - | - | - | - | - | - | - | - | - |
| Presence or Absence of adhesion in kneading step | Absent | Present | Absent | Absent | Absent | Absent | Absent | Absent | Absent | Absent |
| Friction coefficient (relative value) | 100 | 100 | 120 | 97 | 90 | 100 | 100 | 100 | 100 | 86 |
| 8% bending stress (MPa) | 6.6 | 6.4 | 9.5 | 8.6 | 9.0 | 6.0 | 8.0 | 5.0 | 6.6 | 5.8 |

(continued)

| | Comparative Example | | | | | | | | | |
|---|---|---|---|---|---|---|---|---|---|---|
| | 1 | 2 | 3 | 4 | 5 | 6 | 7 | 8 | 9 | 10 |
| Bending fatigue resistance (relative value) | 100 | 127 | 90 | 70 | 95 | 140 | 95 | 140 | 105 | 110 |
| Power-transmission efficiency (relative value) | 100 | 100 | 83 | 103 | 111 | 100 | 85 | 102 | 100 | 109 |
| Change in upper width (mm) | 0.25 | 0.25 | 0.15 | 0.20 | 0.15 | 0.50 | 0.12 | 0.50 | 0.25 | 0.47 |
| Crack depth (mm) | 3.3 | 1.5 | 3.5 | 4.0 | 3.4 | 0.5 | 3.3 | 1.2 | 3.1 | 2.0 |

Comparative Examples 1 and 5 were examples in which an adhesiveness improver was not contained, and the crack resistance was low. In Comparative Example 2, adhesion occurred during a kneading step probably because an amount of the adhesiveness improver was too large.

Comparative Example 3 was an example in which an amount of para-aramid short fibers was large, and the power-transmission efficiency was low due to a large friction coefficient, and the crack resistance was also low.

Comparative Example 4 was an example in which a total amount of the short fibers was large, and the crack resistance was low. Comparative Example 6 was an example in which the total amount of the short fibers was small, and the bending stress was small and the wear resistance was low.

Comparative Example 7 was an example in which an amount of carbon black was too large, and the power-transmission efficiency and the crack resistance were low. Comparative Example 8 was an example in which the amount of carbon black was too small, and the bending stress and the wear resistance were low. Comparative Example 9 was an example in which an amount of the adhesiveness improver was too small, and the crack resistance was low. Comparative Example 10 was an example in which the aramid short fiber was not contained, and the bending stress was small and the wear resistance was low.

When comparing Examples 1 to 3, it can be confirmed that the crack resistance is improved in one having a larger amount of adhesiveness improver.

According to a comparison between Example 1 and Example 4, it can be confirmed that the use of hard carbon (ISAF) results in low power-transmission efficiency, and thus soft carbon (FEF) is preferred.

According to a comparison between Example 1 and Example 5, it can be confirmed that as the amount of aramid short fibers increases, the friction coefficient increases and the power-transmission efficiency and the crack resistance are reduced.

Example 6 is an example in which an amount of nylon short fibers is greater than an amount of aramid short fibers, and it can be confirmed that the power-transmission efficiency is high but the crack resistance is low.

In Example 8 in which the short fiber was only the para-aramid short fiber, the friction coefficient was higher and the power-transmission efficiency was lower than those in Example 7 in which the short fiber was only the meta-aramid short fiber. When the short fiber is only the aramid short fiber, it can be said that the meta-aramid short fiber is preferably used.

According to a comparison between Example 1 and Example 10, when the nylon short fiber and the aramid short fiber were used in combination, one using the meta-aramid short fiber had a large effect of improving the power-transmission efficiency, and one using the para-aramid short fiber had excellent bending fatigue resistance and crack resistance.

Example 9 was an example in which a fiber length of the nylon short fiber was as short as 1 mm, but compared to Example 1 in which the fiber length of the nylon short fiber was 3 mm, the bending fatigue resistance and the crack resistance were reduced.

According to a comparison between Example 1 and Example 11, it can be confirmed that the power-transmission efficiency and the crack resistance are improved, and the bending stress and the wear resistance are reduced as the amount of carbon black decreases.

According to a comparison between Example 1 and Example 12, it can be confirmed that the bending stress and the wear resistance are improved, and the bending fatigue resistance, the power-transmission efficiency, and the crack resistance are reduced as the amount of carbon black increases.

Examples 13 to 15 were examples in which the type of the adhesiveness improver was changed, but all had results equivalent to that of Example 1.

Example 16 was an example in which a fiber length of the para-aramid short fiber was as short as 1 mm, but compared to Example 1 in which the fiber length of the para-aramid short fiber was 3 mm, the bending fatigue resistance and the crack resistance were reduced.

Example 17 was an example in which an amount of aramid short fibers is small and an amount of nylon short fibers is large, and it could be confirmed that the power-transmission efficiency was high but the crack resistance was low.

According to a comparison of Examples 1, 6, and 17 to 20, it can be confirmed that as a proportion of the amount of nylon short fibers to the amount of aramid short fibers increases, the power-transmission efficiency increases while the wear resistance and the crack resistance are reduced. It can also be confirmed that as the proportion of the amount of nylon short fibers to the amount of aramid short fibers decreases, the bending stress increases and the wear resistance increases while the power-transmission efficiency and the crack resistance are reduced. Among these Examples, Example 1, which has a highest crack resistance while maintaining relatively high power-transmission efficiency and wear resistance, is considered to be a best mode.

Although the present invention has been described in detail with reference to specific embodiments, it is apparent to those skilled in the art that various changes and modifications can be made without departing from the spirit and scope of the present invention. The present application is based on Japanese Patent Application No. 2022-104906 filed on June 29, 2022, Japanese Patent Application No. 2023-016797 filed on February 7, 2023, and Japanese Patent Application No. 2023-088786 filed on May 30, 2023, and the content thereof is incorporated herein by reference.

INDUSTRIAL APPLICABILITY

The rubber composition of the present invention can be used for various molded products, and particularly can be used for a power-transmission belt, for example, a frictional power-transmission belt such as a flat belt, a wrapped V-belt, a raw-edge V-belt, a raw-edge cogged V-belt, and a V-ribbed belt, and a synchronous power-transmission belt such as a toothed belt and a double-side toothed belt. Particularly, when the rubber composition of the present invention is used as a compression rubber layer of a power-transmission belt, it is possible to simultaneously improve the wear resistance, the fuel consumption saving properties, and the crack resistance. Therefore, the rubber composition of the present invention is useful for a compression rubber layer of a variable speed belt used in motorcycles, four-wheeled buggies, snowmobiles, agricultural machines, and the like, which are becoming increasingly powerful.

REFERENCE SIGNS LIST

1: power-transmission belt
2, 6: reinforcing fabric
3: tension rubber layer
4: tension member layer
4a: tension member
5: compression rubber layer

**Claims**

1. A rubber composition used for a compression rubber layer of a power-transmission belt, the rubber composition comprising:

   a chloroprene rubber;
   a short fiber;
   an adhesiveness improver; and
   a carbon black, wherein
   the short fiber comprises an aramid short fiber, and
   a proportion of the short fiber is 15 parts by mass to 38 parts by mass, a proportion of the aramid short fiber is 5 parts by mass to 28 parts by mass, a proportion of the adhesiveness improver is 0.1 parts by mass to 3.2 parts by mass, and a proportion of the carbon black is 30 parts by mass to 70 parts by mass, with respect to 100 parts by mass of the chloroprene rubber.

2. The rubber composition according to claim 1, wherein the short fiber further comprises an aliphatic polyamide short fiber, and
a proportion of the aliphatic polyamide short fiber is 25 parts by mass or less with respect to 100 parts by mass of the chloroprene rubber.

3. The rubber composition according to claim 2, wherein an average fiber length of the aliphatic polyamide short fiber is 1.5 mm or more.

4. The rubber composition according to any one of claims 1 to 3, wherein the carbon black comprises a soft carbon.

5. The rubber composition according to any one of claims 1 to 4, wherein the adhesiveness improver comprises a phenol resin and/or an amino resin.

6. A power-transmission belt comprising a compression rubber layer comprising the rubber composition according to any one of claims 1 to 5.

7. A method for manufacturing a power-transmission belt, the method comprising:
a kneading step of kneading the rubber composition according to any one of claims 1 to 5 to prepare an uncrosslinked rubber sheet for forming a compression rubber layer.

*FIG. 1A*

EP 4 549 778 A1

EP 4 549 778 A1

FIG. 1B

30

31   31b

31a

1

32

32a

32b

*FIG. 2*

EP 4 549 778 A1

*FIG. 3*

# FIG. 4

ORIENTATION DIRECTION
OF SHORT FIBER

23

21

22 b        20 mm        22 a

FIG. 5

FIG. 6

FIG. 7

## INTERNATIONAL SEARCH REPORT

| International application No. |
|---|
| **PCT/JP2023/022827** |

### A. CLASSIFICATION OF SUBJECT MATTER

*F16G 1/08*(2006.01)i; *B29D 29/10*(2006.01)i; *C08K 3/04*(2006.01)i; *C08K 7/02*(2006.01)i; *C08L 11/00*(2006.01)i
FI: F16G1/08 C; B29D29/10; C08L11/00; C08K3/04; C08K7/02

According to International Patent Classification (IPC) or to both national classification and IPC

### B. FIELDS SEARCHED

Minimum documentation searched (classification system followed by classification symbols)

F16G1/08; B29D29/10; C08K3/04; C08K7/02; C08L11/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-85864 A (MITSUBOSHI BELTING LTD.) 08 June 2022 (2022-06-08) paragraphs [0115]-[0152], fig. 1, 2 | 1 |
| Y | | 2-7 |
| Y | JP 2016-211589 A (BANDO CHEM. IND., LTD.) 15 December 2016 (2016-12-15) paragraphs [0053], [0054], [0063], [0073], [0115], [0116], fig. 1 | 2-7 |
| Y | JP 6831943 B1 (MITSUBOSHI BELTING LTD.) 17 February 2021 (2021-02-17) paragraphs [0068]-[0076] | 4-7 |

☐ Further documents are listed in the continuation of Box C.   ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **30 August 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

### INTERNATIONAL SEARCH REPORT
Information on patent family members

| International application No. |
| --- |
| **PCT/JP2023/022827** |

| Patent document<br>cited in search report | | | Publication date<br>(day/month/year) | Patent family member(s) | | | Publication date<br>(day/month/year) |
| --- | --- | --- | --- | --- | --- | --- | --- |
| JP | 2022-85864 | A | 08 June 2022 | (Family: none) | | | |
| JP | 2016-211589 | A | 15 December 2016 | WO | 2016/170795 | A1 | |
| | | | | CN | 107532681 | A | |
| JP | 6831943 | B1 | 17 February 2021 | EP | 4049837 | A1 | |
| | | | | paragraphs [0067]-[0075] | | | |
| | | | | WO | 2021/079809 | A1 | |
| | | | | CN | 114599897 | A | |
| | | | | KR 10-2022-0066117 | | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004003609 A
- JP 2012241831 A
- JP 2014209026 A
- JP H04366045 A
- JP 2010151209 A
- JP 2022104906 A
- JP 2023016797 A
- JP 2023088786 A